# EUROPEAN PATENT APPLICATION

(11) **EP 4 123 942 A1**
(43) Date of publication of application: **25.01.2023**
(21) Application number: 21770979.9
(22) Date of filing: 17.03.2021
(51) Int. Cl.: H04L 5/00

(54) **METHODS FOR SENDING, CONFIGURING AND MEASURING SRS, AND POSITIONING METHOD AND DEVICE**

(30) Priority: 20.03.2020 CN 202010202889
(71) Applicant: Vivo Mobile Communication Co., Ltd., Dongguan, Guangdong 523863 (CN)
(72) Inventor: WANG, Yuanyuan, Dongguan, Guangdong 523863 (CN); WU, Huaming, Dongguan, Guangdong 523863 (CN); SI, Ye, Dongguan, Guangdong 523863 (CN); ZHUANG, Zixun, Dongguan, Guangdong 523863 (CN)
(74) Representative: Raffay & Fleck
(86) International application number: PCT/CN2021/081281
(87) International publication number: WO 2021/185276

(57) **Abstract**

Provided in the embodiments of the present invention are methods for sending, configuring and measuring an SRS, and a positioning method and device. The method for sending an SRS comprises: according to target information related to DRX and/or the RRC status, sending an SRS used for positioning.

## Description

### CROSS-REFERENCE TO RELATED APPLICATIONS

This application claims priority to Chinese Patent Application No. 202010202889.7, filed in China on March 20, 2020, which is incorporated herein by reference in its entirety.

### TECHNICAL FIELD

Embodiments of the present invention relate to the field of wireless communications technologies, and in particular, to a method for sending, configuring, and measuring an SRS, a positioning method, and a device.

### BACKGROUND

Sounding reference signals (Sounding Reference Signal, SRS) include SRSs for measurement and SRSs for positioning. An SRS for measurement may be sent to a serving cell of user equipment (User Equipment, UE, also referred to as a terminal) and is used to measure uplink channel quality for the UE. An SRS for positioning may be sent to a serving cell and a neighboring cell of the UE, and is used for positioning of the UE.

It is specified in the related art that if the UE does not start a discontinuous reception onDuration timer (DRX-OndurationTimer), the UE does not need to send an SRS periodically and semi-statically. However, it is not specified whether the SRS is used for measurement or positioning. That is, a manner for sending the SRS for positioning is still unclear, and therefore the neighboring cell may still perform SRS measurement when the UE sends no SRS, resulting in waste of resources.

In long term evolution (Long Term Evolution, LTE), only a radio resource control (Radio Resource Control, RRC) idle state and an RRC connected state are supported. A common scenario in practice is to use the idle state as a main sleeping state of the UE to save power. However, due to frequent transmission of small data packets in some smart phones, if the manner in LTE is used, there may be a large number of switchings from the idle state to the connected state. Such switchings increase signaling load and signaling delay. Therefore, in order to reduce signaling load and a waiting time, an RRC_INACTIVE (inactive state) state is introduced to new radio (New Radio, NR). In the RRC _INACTIVE state, an RRC context between a network side and a UE side is maintained. From the perspective of a core network, a connection between a radio access network (Radio Access Network, RAN) side and the core network is maintained. Therefore, switching from the inactive state to the connected state is quite fast, requiring no signalling from the core network. In addition, the UE is allowed to sleep in an idle state-like manner, and mobility processing is performed through cell reselection. Therefore, RRC _INACTIVE may be considered as a hybrid of the idle and connected states. In the related art, it is not specified whether the SRS for positioning is sent in an RRC non-connected state (including the idle state and the inactive state). That is, a manner for sending the SRS for positioning is still unclear, and therefore the neighboring cell may still perform SRS measurement when the UE sends no SRS, resulting in waste of resources.

### SUMMARY

Embodiments of the present invention provide a method for sending, configuring, and measuring an SRS, a positioning method, and a device, so as to resolve the problem that a manner for sending an SRS for positioning is unclear and therefore a neighboring cell may still perform SRS measurement when UE sends no SRS, resulting in waste of resources.

In order to resolve the foregoing technical problem, the present invention is implemented as follows.

According to a first aspect, an embodiment of the present invention provides a method for sending an SRS, applied to a terminal and including:
sending a sounding reference signal SRS for positioning based on discontinuous reception DRX-related target information and/or a radio resource control RRC status.

According to a second aspect, an embodiment of the present invention provides a method for configuring an SRS, applied to a network-side device and including:
sending first information to a terminal, a location management device, or a neighboring cell, where the first information includes at least one of the following: DRX configuration information, configuration information of the SRS, a current period of the SRS, indication information for indicating sending or not sending the SRS in a DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and the first information is used to determine at least one of the following: whether the terminal sends or does not send the SRS in the DRX non-active time and how to send the SRS; and/or
receiving second information sent by a location management device, where the second information includes at least one of the following: indication information for indicating sending or not sending an SRS for positioning in a DRX non-active time, a current period of the SRS, and a relationship between sending of the SRS and wake-up information; or
sending third information to a terminal, a location management device, or a neighboring cell, where the third information includes at least one of the following: configuration information of an SRS for positioning and RRC state indicator information; and the third information is used to determine: whether the terminal sends or does not send the SRS in an RRC non-connected state.

According to a third aspect, an embodiment of the present invention provides a method for measuring an SRS, applied to a location management device and including:
receiving first information, where the first information includes at least one of the following: DRX configuration information, configuration information of the SRS, a current period of the SRS, indication information for indicating sending or not sending the SRS in a DRX non-active time, indication information that a terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and
determining at least one of the following based on the first information: whether the terminal sends or does not send an SRS for positioning in the DRX non-active time and how to send the SRS; and/or
sending second information to a network-side device or a terminal, where the second information includes at least one of the following: indication information for indicating sending or not sending an SRS for positioning in a DRX non-active time, a current period of the SRS, and a relationship between sending of the SRS and wake-up information; or
receiving third information, where the third information includes at least one of the following: configuration information of an SRS for positioning and RRC state indicator information; and the third information is used to determine whether the terminal sends or does not send the SRS in an RRC non-connected state; and
determining, based on the third information, whether the terminal sends or does not send the SRS for positioning in the RRC non-connected state.

According to a fourth aspect, an embodiment of the present invention provides a terminal, including:
a first sending module, configured to send an SRS for positioning based on DRX-related target information and/or an RRC status.

According to a fifth aspect, an embodiment of the present invention provides a network-side device, including:
a first sending module, configured to send first information to a terminal, a location management device, or a neighboring cell, where the first information includes at least one of the following: DRX configuration information, configuration information of an SRS, a current period of the SRS, indication information for indicating sending or not sending the SRS in a DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and the first information is used to determine at least one of the following: whether the terminal sends or does not send the SRS in the DRX non-active time and how to send the SRS; and/or
a receiving module, configured to receive second information sent by a location management device, where the second information includes at least one of the following: indication information for indicating sending or not sending an SRS for positioning in a DRX non-active time, a current period of the SRS, and a relationship between sending of the SRS and wake-up information; or
a second sending module, configured to send third information to a terminal, a location management device, or a neighboring cell, where the third information includes at least one of the following: configuration information of an SRS for positioning and RRC state indicator information; and the third information is used to determine: whether the terminal sends or does not send the SRS in an RRC non-connected state.

According to a sixth aspect, an embodiment of the present invention provides a location management device, including:
a first receiving module, configured to receive first information, where the first information includes at least one of the following: DRX configuration information, configuration information of an SRS, a current period of the SRS, indication information for indicating sending or not sending the SRS in a DRX non-active time, indication information that a terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and
a first determining module, configured to determine at least one of the following based on the first information: whether the terminal sends or does not send an SRS for positioning in the DRX non-active time and how to send the SRS; and/or
a sending module, configured to send second information to a network-side device or a terminal, where the second information includes at least one of the following: indication information for indicating sending or not sending an SRS for positioning in a DRX non-active time, a current period of the SRS, and a relationship between sending of the SRS and wake-up information; or
a second receiving module, configured to receive third information, where the third information includes at least one of the following: configuration information of an SRS for positioning and RRC state indicator information; and the third information is used to determine whether the terminal sends or does not send the SRS in an RRC non-connected state; and
a second determining module, configured to determine, based on the third information, whether the terminal sends or does not send the SRS for positioning in the RRC non-connected state.

According to a seventh aspect, an embodiment of the present invention provides a terminal, including a processor, a memory, and a computer program stored in the memory and capable of running on the processor, where when the computer program is executed by the processor, the steps of the method for sending an SRS according to the first aspect are implemented.

According to an eighth aspect, an embodiment of the present invention provides a network-side device, including a processor, a memory, and a computer program stored in the memory and capable of running on the processor. When the computer program is executed by the processor, the steps of the method for configuring an SRS according to the second aspect are implemented.

According to a ninth aspect, an embodiment of the present invention provides a network-side device, including a processor, a memory, and a computer program stored in the memory and capable of running on the processor. When the computer program is executed by the processor, the steps of the method for measuring an SRS according to the third aspect are implemented.

According to a tenth aspect, an embodiment of the present invention provides a positioning method, applied to a communications device and including:
sending RRC state indicator information to a location management device, where the communications device is a terminal or a network-side device, and the RRC state indicator information includes at least RRC connection state information.

According to an eleventh aspect, an embodiment of the present invention provides a positioning method, applied to a location management device and including:
receiving RRC state indicator information sent by a terminal or a network-side device, where the RRC state indicator information includes at least RRC connection state information.

According to a twelfth aspect, an embodiment of the present invention provides a communications device, including:
a sending module, configured to send RRC state indicator information to a location management device, where the communications device is a terminal or a network-side device, and the RRC state indicator information includes at least RRC connection state information.

According to a thirteenth aspect, an embodiment of the present invention provides a location management device, including:
a receiving module, configured to receive RRC state indicator information sent by a terminal or a network-side device, where the RRC state indicator information includes at least RRC connection state information.

According to a fourteenth aspect, an embodiment of the present invention provides a communications device, including a processor, a memory, and a computer program stored in the memory and capable of running on the processor. When the computer program is executed by the processor, the steps of the foregoing positioning method applied to the communications device are implemented.

According to a fifteenth aspect, an embodiment of the present invention provides a location management device, including a processor, a memory, and a computer program stored in the memory and capable of running on the processor. When the computer program is executed by the processor, the steps of the foregoing positioning method applied to the location management device are implemented.

According to a sixteenth aspect, an embodiment of the present invention provides a computer-readable storage medium, where a computer program is stored in the computer-readable storage medium, and when the computer program is executed by a processor, the steps of the method for sending an SRS according to the first aspect are implemented; or when the computer program is executed by a processor, the steps of the method for configuring an SRS according to the second aspect are implemented; or when the computer program is executed by a processor, the steps of the method for measuring an SRS according to the third aspect are implemented; or when the computer program is executed by a processor, the steps of the foregoing positioning method according to the tenth aspect are implemented; or when the computer program is executed by a processor, the steps of the foregoing positioning method according to the eleventh aspect are implemented.

In the embodiments of the present invention, the method for sending an SRS used for positioning is clear, so that a neighboring cell does not perform SRS measurement when UE sends no SRS, thereby avoiding waste of resources.

### BRIEF DESCRIPTION OF DRAWINGS

Other advantages and benefits will become apparent to those of ordinary skill in the art by reading detailed description of the exemplary embodiments below. The accompanying drawings are merely intended to illustrate the objectives of the preferred embodiments and are not intended to limit the present invention. Throughout the accompanying drawings, the same reference numerals represent the same components. In the accompanying drawings:
FIG. 1 is a schematic architectural diagram of a wireless communications system according to an embodiment of the present invention;
FIG. 2 is a schematic diagram of a DRX cycle;
FIG. 3 is a schematic diagram of long DRX cycles and short DRX cycles;
FIG. 4A is a schematic flowchart of a method for sending an SRS according to an embodiment of the present invention;

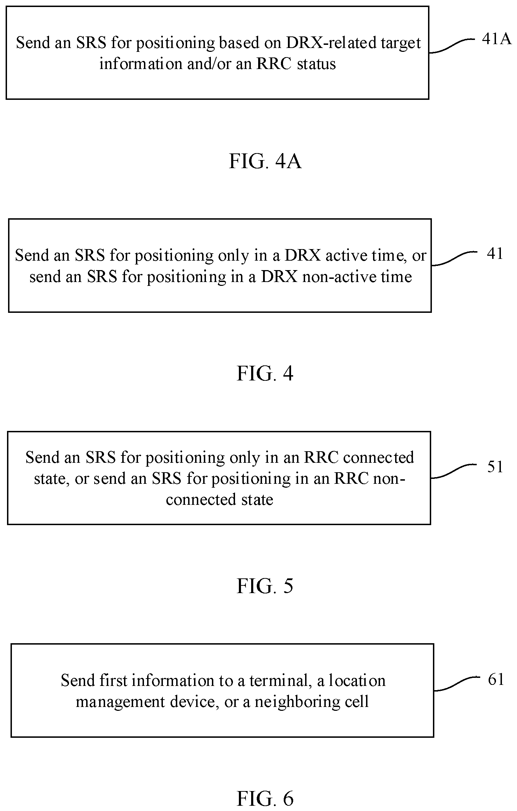

FIG. 4 is a schematic flowchart of a method for sending an SRS according to an embodiment of the present invention;
FIG. 5 is a schematic flowchart of a method for sending an SRS according to another embodiment of the present invention;
FIG. 6 is a schematic flowchart of a method for configuring an SRS according to an embodiment of the present invention;

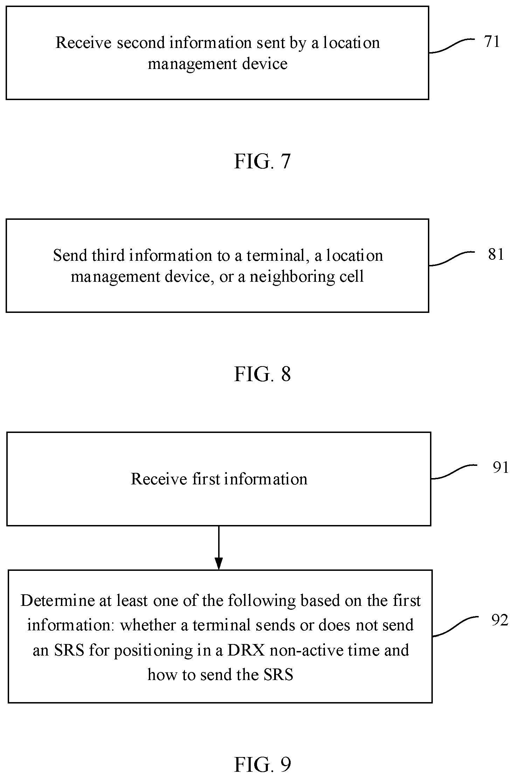

FIG. 7 is a schematic flowchart of a method for configuring an SRS according to another embodiment of the present invention;
FIG. 8 is a schematic flowchart of a method for configuring an SRS according to still another embodiment of the present invention;
FIG. 9 is a schematic flowchart of a method for measuring an SRS according to an embodiment of the present invention;

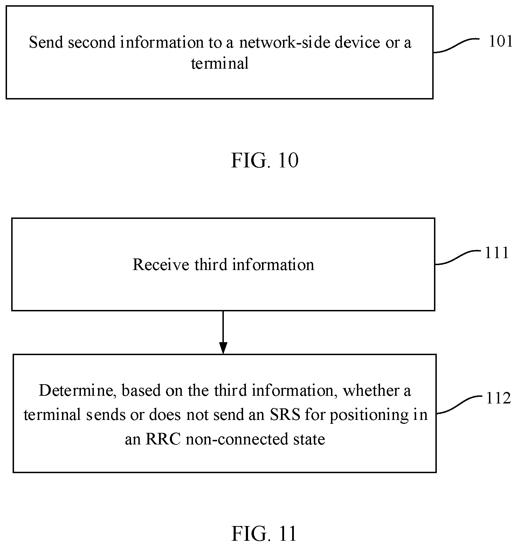

FIG. 10 is a schematic flowchart of a method for measuring an SRS according to another embodiment of the present invention;
FIG. 11 is a schematic flowchart of a method for measuring an SRS according to still another embodiment of the present invention;

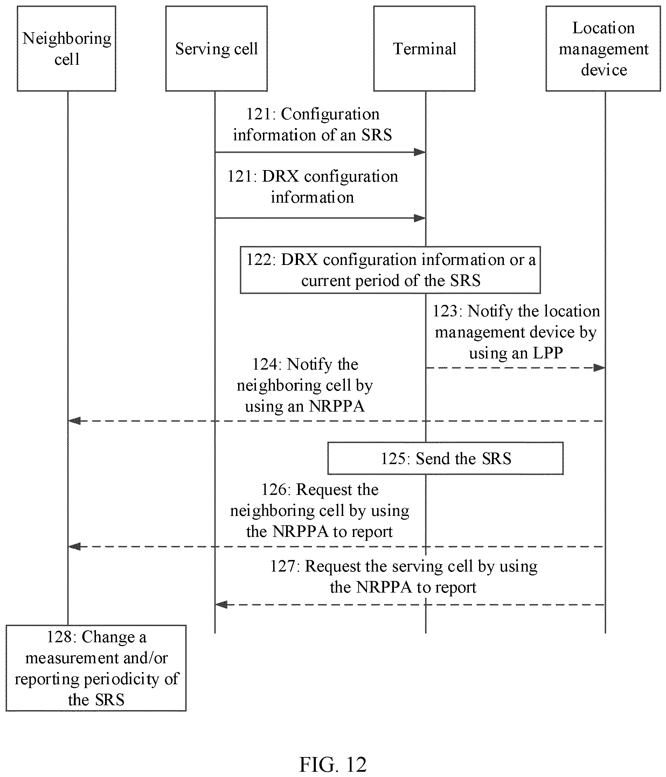

FIG. 12 is a schematic flowchart of interaction between a terminal, a serving cell, a location management device, and a neighboring cell according to an embodiment of the present invention;

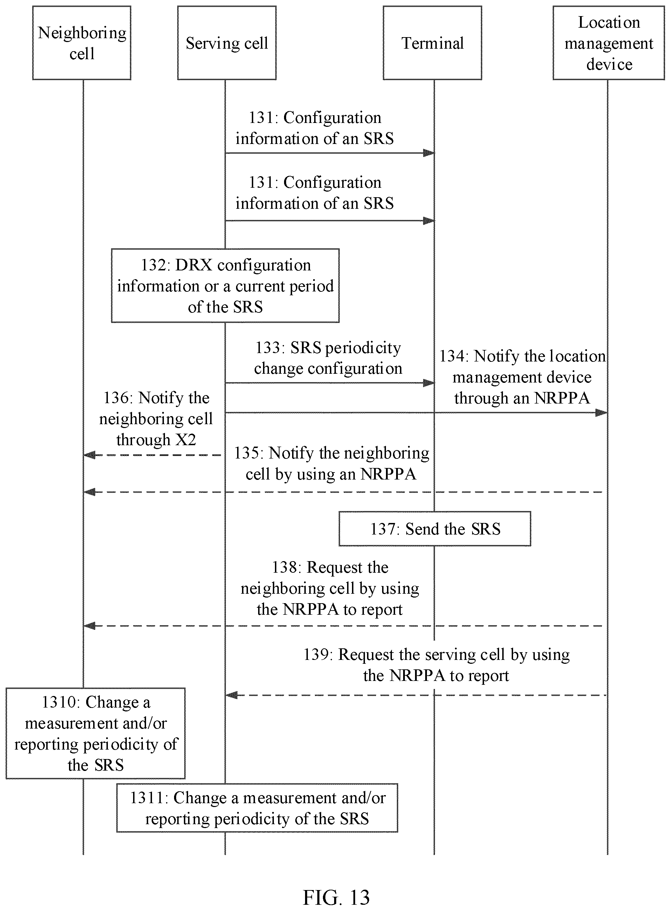

FIG. 13 is a schematic flowchart of interaction between a terminal, a serving cell, a location management device, and a neighboring cell according to another embodiment of the present invention;

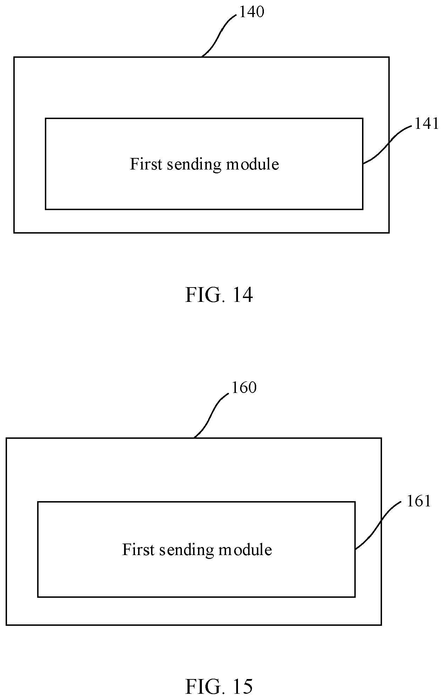

FIG. 14 is a schematic structural diagram of a terminal according to an embodiment of the present invention;
FIG. 15 is a schematic structural diagram of a network-side device according to an embodiment of the present invention;

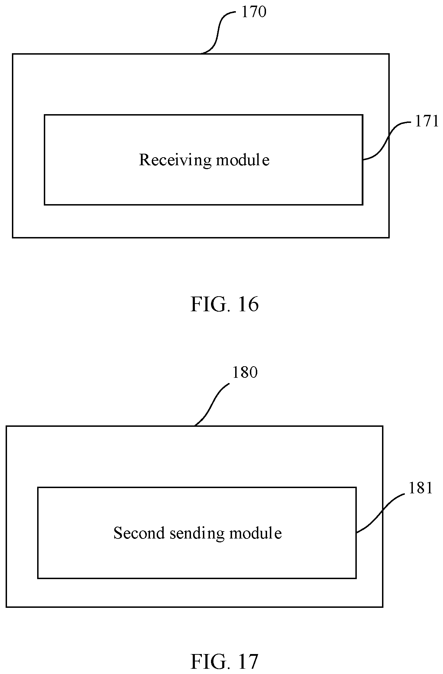

FIG. 16 is a schematic structural diagram of a network-side device according to another embodiment of the present invention;
FIG. 17 is a schematic structural diagram of a network-side device according to still another embodiment of the present invention;

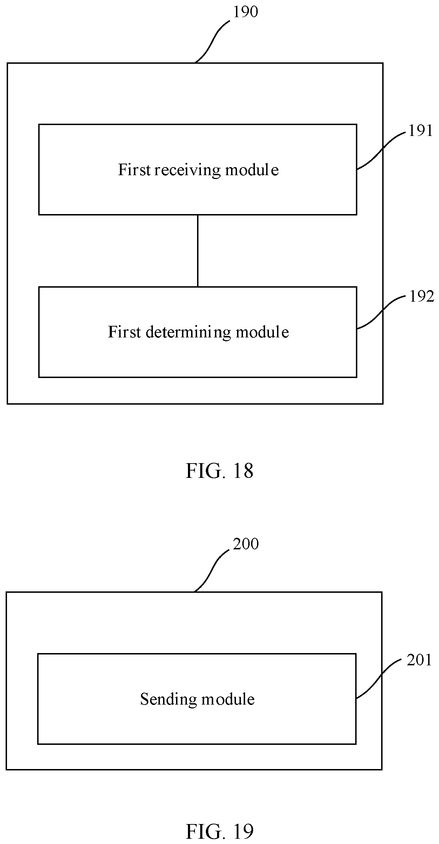

FIG. 18 is a schematic structural diagram of a location management device according to an embodiment of the present invention;
FIG. 19 is a schematic structural diagram of a location management device according to another embodiment of the present invention;

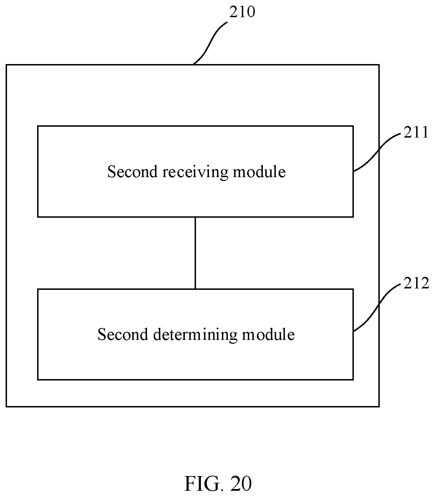

FIG. 20 is a schematic structural diagram of a location management device according to still another embodiment of the present invention;

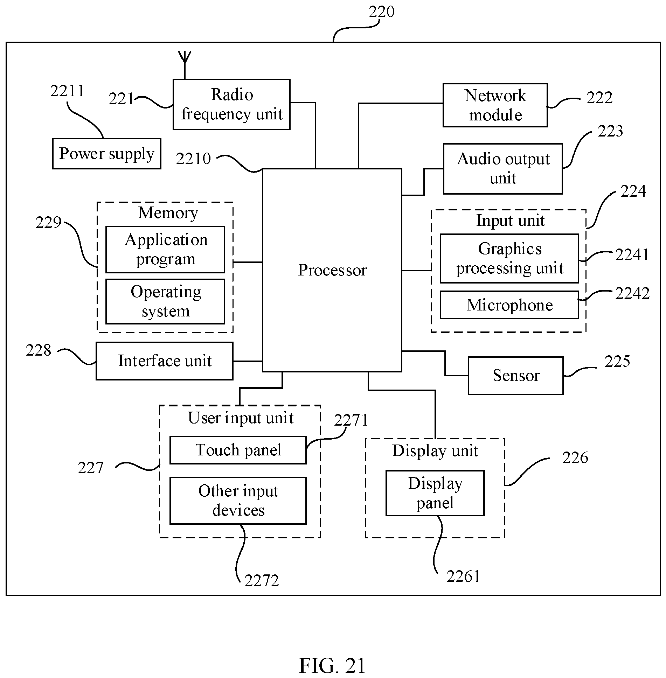

FIG. 21 is a schematic structural diagram of hardware of a terminal according to an embodiment of the present invention;

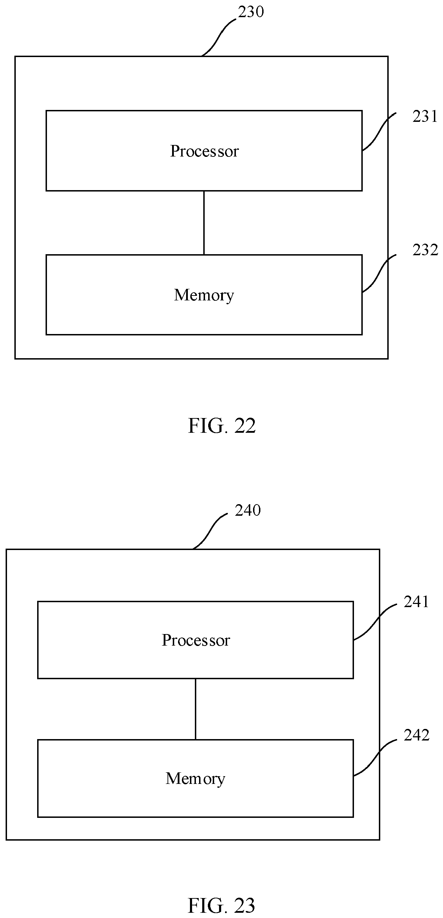

FIG. 22 is a schematic structural diagram of a terminal according to yet another embodiment of the present invention;
FIG. 23 is a schematic structural diagram of a network-side device according to yet another embodiment of the present invention;

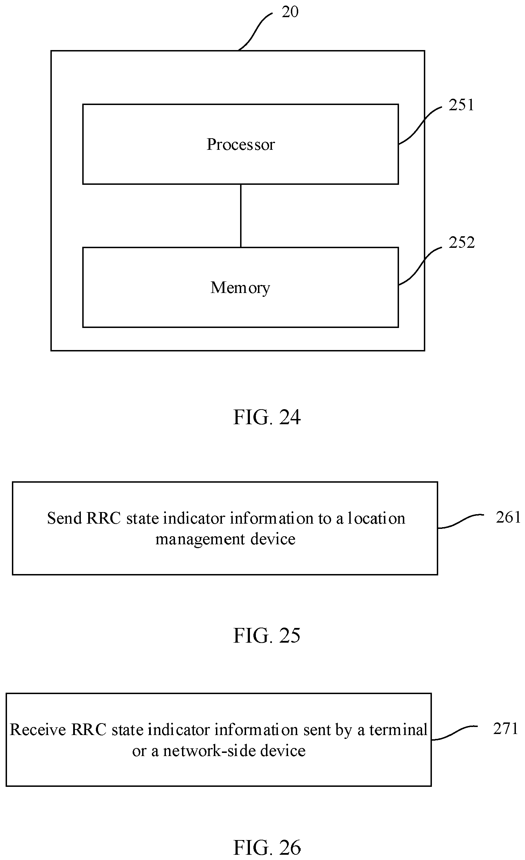

FIG. 24 is a schematic structural diagram of a location management device according to yet another embodiment of the present invention;
FIG. 25 is a schematic flowchart of a positioning method according to an embodiment of the present invention;
FIG. 26 is a schematic flowchart of a positioning method according to another embodiment of the present invention;

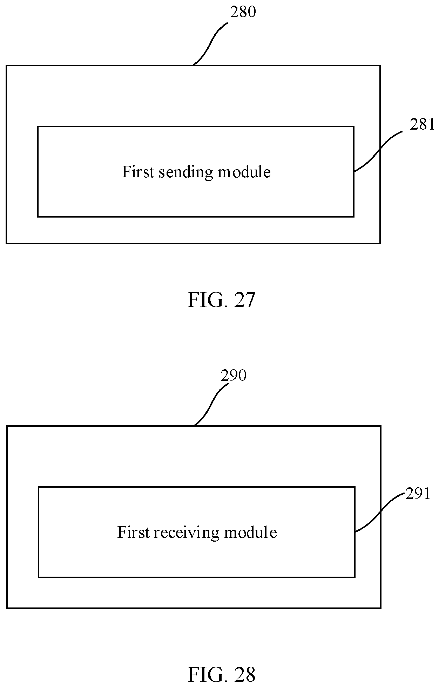

FIG. 27 is a schematic structural diagram of a communications device according to an embodiment of the present invention;
FIG. 28 is a schematic structural diagram of a location management device according to yet another embodiment of the present invention;

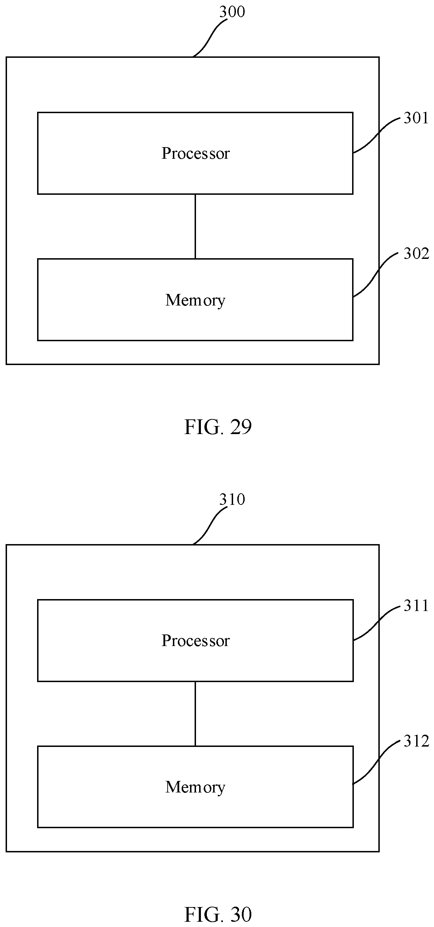

FIG. 29 is a schematic structural diagram of a communications device according to another embodiment of the present invention; and
FIG. 30 is a schematic structural diagram of a location management device according to yet another embodiment of the present invention.

### DETAILED DESCRIPTION OF EMBODIMENTS

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In the embodiments of the present invention, the term "an example" or "for example" is used to represent an example, an illustration, or a description. Any embodiment or design scheme described as "an example" or "for example" in the embodiments of the present invention should not be construed as being more preferred or advantageous than other embodiments or design schemes. To be precise, the words such as "an example" or "for example" are intended to present a related concept in a specific manner.

The following describes the embodiments of the present invention with reference to the accompanying drawings. A method for sending, configuring, and measuring an SRS, a positioning method, and a device that are provided in the embodiments of the present invention can be applied to a wireless communications system. The wireless communications system may be a 5G system, an evolved long term evolution (Evolved Long Term Evolution, eLTE) system, or a later evolved communications system.

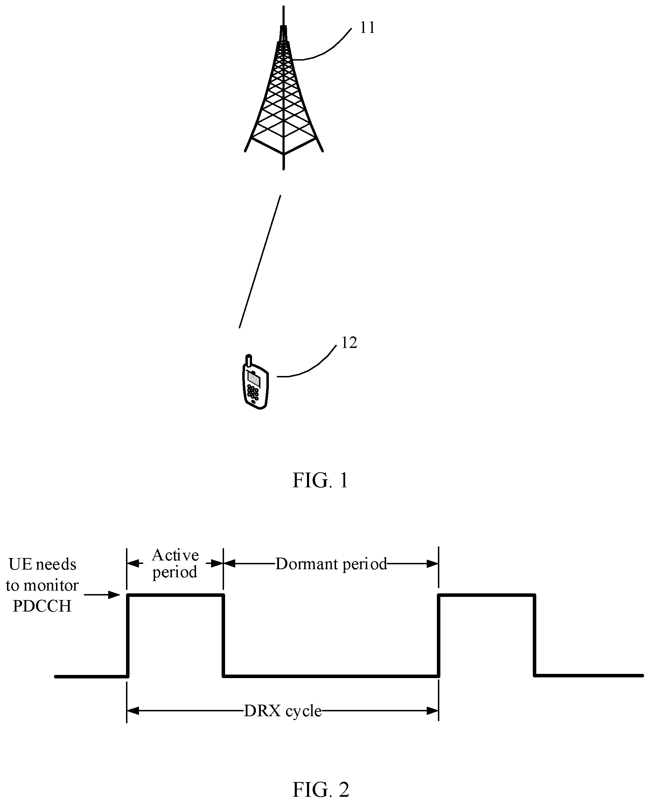

FIG. 1 is a schematic architectural diagram of a wireless communications system according to an embodiment of the present invention. As shown in FIG. 1, the wireless communications system may include a network-side device 11 and a terminal 12. The terminal 12 may be connected to the network-side device 11. In an actual application, connection between the foregoing devices may be wireless connection. To conveniently and intuitively represent a connection relationship between the devices, a solid line is used in FIG. 1.

It should be noted that the foregoing communications system may include a plurality of terminals 12, and the network-side device 11 may communicate with the plurality of terminals 12 (transmitting signaling or data).

The network-side device 11 provided in this embodiment of the present invention may be a base station. The base station may be a commonly used base station, or may be an evolved node base station (evolved node base station, eNB), or may be a device such as a network-side device (for example, a next generation base station (next generation node base station, gNB)), a transmission and reception point (transmission and reception point, TRP), or a cell (cell) in a 5G system; or a network-side device in a later evolved communications system.

The terminal 12 provided in an embodiment of the present invention may be a mobile phone, a tablet computer, a notebook computer, an ultra-mobile personal computer (Ultra-Mobile Personal Computer, UMPC), a netbook, a personal digital assistant (Personal Digital Assistant, PDA), or the like.

The following first describes some technical content involved in the embodiments of the present invention.

Referring to FIG. 2, a discontinuous reception (Discontinuous Reception, DRX) cycle (cycle) is formed by "On Duration" and "Opportunity for DRX". In an "On Duration" time, UE monitors and receives a physical downlink control channel (Physical Downlink Control Channel, PDCCH) (that is, a DRX active time, which may be also referred to as an active period). In an "Opportunity for DRX" time, the UE does not receive data on a downlink channel to reduce power consumption (that is, a DRX non-active time, which may be also referred to as a dormant period).

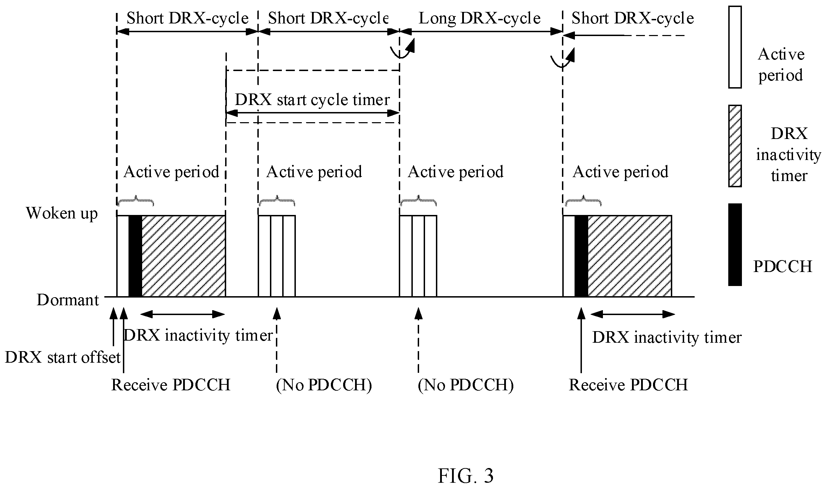

Referring to FIG. 3, a short DRX-cycle (short DRX-cycle) or a long DRX-cycle (long DRX-cycle) may be configured based on different service models.

The following describes three states of NR RRC.

UE in an idle state has no RRC context on a network side. That is, parameters required for communication between the network side and the UE do not belong to a specific cell, and the network side does not know whether the UE is present. The UE is allocated a list of tracking area identifiers (Tracking area identifier, TAI) list (list). From the perspective of a core network, a connection between a radio access network (Radio Access Network, RAN) side and the core network has been interrupted. In order to reduce power consumption, the UE is in a dormant state for most time, and data transmission cannot be performed. In a downlink, the UE in the idle state may be periodically woken up to receive a paging message (if any) from the network side. Mobility (Mobility) processing may be processed by the UE through cell reselection. In the idle state, the UE does not keep uplink synchronization with the network side. For switching from the idle state to a connected (Connected) state, an RRC context needs to be established between the UE and the network side only through random access (Random Access).

In an RRC_Connected state, an RRC context can be established and all parameters required for communication are known to two entities (the UE and the network side). From the perspective of the core network, the UE is in a CN_Connected state. A cell that serves the UE is already known, and has been configured with a destination device identifier, that is, a cell radio network temporary identifier (C-RNTI), for transmitting signaling between the device and the network. Data can be transmitted in the connected state. However, because data flows of packets are usually burst, when no data flow is transmitted, a receiving circuit of the UE can be switched off to reduce power consumption, that is, the DRX technology can be used. In the connected state, because the RRC context has been established in a base station (gNB), it is relatively fast to exit the DRX mode and start data receiving/transmitting. In the connected state, mobility (Mobility) can be controlled by the network side, that is, the UE provides neighboring cell measurements for the network, and the network instructs the device to perform handover (handover). Uplink time synchronization may or may not exist. When there is data to be transmitted, uplink synchronization may be established through random access.

In LTE, only an idle state and a connected state are supported. A common scenario in practice is to use the idle state as a main sleeping state of the UE to save power. However, due to frequent transmission of small data packets in some smart phones, if the manner in LTE is used, there may be a large number of switchings from the idle state to the connected state. Such switchings increase signaling load and signaling delay. Therefore, in order to reduce signaling load and a waiting time, an RRC_INACTIVE (inactive state) state is introduced to NR

In the RRC_INACTIVE state, an RRC context between a network side and a UE side is maintained. From the perspective of the core network, a connection between a RAN side and the core network is maintained. Therefore, switching from the inactive state to the connected state is quite fast, requiring no signalling from the core network. In addition, the UE is allowed to sleep in an idle state-like manner, and mobility processing is performed through cell reselection. Therefore, RRC _INACTIVE may be considered as a hybrid of the idle and connected states.

As can be seen from the foregoing discussion, an important difference between different states lies in a mobility (mobility) mechanism used. Efficient mobility processing is a critical part of any mobile communications system. In the idle and inactive states, mobility processing is performed by the device through cell reselection; in the connected state, mobility processing is performed by the network side based on UE measurement.

Referring to FIG. 4A, FIG. 4A illustrates a method for sending an SRS according to an embodiment of the present invention. The method is applied to a terminal and includes the following step.

Step 41A: Send a sounding reference signal SRS for positioning based on DRX-related target information and/or an RRC status.

In this embodiment of the present invention, it is clear that a manner of sending an SRS is determined based on the DRX-related target information and/or the RRC status, so that a neighboring cell can skip performing SRS measurement when the UE sends no SRS, thereby avoiding waste of resources.

Referring to FIG. 4, FIG. 4 illustrates a method for sending an SRS according to an embodiment of the present invention. The method is applied to a terminal and includes the following step.

Step 41: Send an SRS for positioning only in a DRX active time (Active Time), or send an SRS for positioning in a DRX non-active time (non-Active time).

The sending the SRS for positioning only in the DRX active time means not sending the SRS for positioning in the DRX non-active time.

However, the sending an SRS for positioning in a DRX non-active time may include: sending the SRS for positioning only in the DRX non-active time, or sending the SRS for positioning in both the DRX non-active time and the DRX active time.

In this embodiment of the present invention, the manner of sending the SRS for positioning in the DRX non-active time is clear, so that a neighboring cell does not perform SRS measurement when UE sends no SRS, thereby avoiding waste of resources.

In this embodiment of the present invention, optionally, the SRS includes at least one of the following: an aperiodic SRS, a periodic SRS, and a semi-static SRS.

Further optionally, the aperiodic SRS, the periodic SRS, and the semi-static SRS may have different behaviors. For example, for the aperiodic SRS, the SRS for positioning is sent in the DRX active time and the DRX non-active time.

In some embodiments of the present invention, optionally, the target information includes first information, and the method for sending an SRS further includes the following step.

Step 401: Send the first information to a location management device, where the first information includes at least one of the following: DRX configuration information, configuration information of the SRS, a current period of the SRS, indication information for indicating sending or not sending the SRS in the DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal.

In this embodiment of the present invention, the terminal sends the first information to the location management device, so that the location management device can determine, based on the first information, whether the terminal sends or does not send the SRS in the DRX non-active time and/or how to send the SRS. For example, when the terminal sends no SRS, the location management device may cancel, reconfigure, or re-request measurement on the SRS by the neighboring cell; or the location management device forwards the first information to the neighboring cell, and the neighboring cell determines, based on the DRX configuration information, whether the terminal sends or does not send the SRS in the DRX non-active time and/or how to send the SRS, so that the neighboring cell does not perform SRS measurement when the UE sends no SRS, thereby avoiding waste of resources.

In this embodiment of the present invention, the location management device may be located in a core network, for example, the location management device may be a location management function (LMF or E-SLMC), or the like. The location management device may alternatively be located in an access network.

In this embodiment of the present invention, optionally, the first information is sent to the location management device by using an LTE positioning protocol (LPP) or an evolved LPP.

The following provides descriptions by using examples.

In some embodiments of the present invention, the terminal sends the DRX configuration information to the location management device, so that the location management device may determine, based on the DRX configuration information, whether the terminal sends or does not send the SRS in the DRX non-active time and/or how to send the SRS; or the location management device forwards the DRX configuration information to the neighboring cell, and the neighboring cell determines, based on the DRX configuration information, whether the terminal sends or does not send the SRS in the DRX non-active time and/or how to send the SRS.

Optionally, the terminal sends the DRX configuration information to the location management device by using an LPP or evolved LPP.

Optionally, the location management device sends the DRX configuration information to the neighboring cell by using an LTE Positioning Protocol A (LPPA), an evolved LPPA, an NR Positioning Protocol A (NRPPA), or an evolved NRPPA.

In some embodiments of the present invention, the terminal sends, to the location management device, the current period of the SRS, the indication information that the terminal has configured DRX, the indication information that the DRX cycle of the terminal has changed, and/or the indication information that the terminal has cancelled DRX configuration. In this way, the location management device may determine, based on the foregoing information, whether the terminal sends or does not send the SRS in the DRX non-active time and/or how to send the SRS; or the location management device forwards the foregoing information to the neighboring cell, and the neighboring cell determines, based on the foregoing information, whether the terminal sends or does not send the SRS in the DRX non-active time and/or how to send the SRS.

Optionally, after the DRX is configured, the terminal sends, to the location management device, a current period T2 of the SRS and/or the indication information that the terminal has configured the DRX.

Further optionally, when the DRX cycle has changed or the DRX becomes long (long) DRX, the terminal sends, to the location management device, a current period T3 of the SRS and/or the indication information that the DRX cycle of the terminal has changed.

Optionally, after the DRX configuration has been cancelled, the terminal sends, to the location management device, a current period T1 of the SRS and/or the indication information that the terminal has cancelled the DRX configuration.

Optionally, T1, T2, and T3 are different from each other.

Further optionally, T2 is greater than T1, and T3 is greater than T2.

In the foregoing embodiment, optionally, the current period of the SRS is determined based on a function of a configuration periodicity of the SRS and/or a function of the DRX cycle. For example, further, the current period of the SRS is increased due to the DRX configuration.

For example, the function includes one of the following:
Max (A, B); and
lowest common multiple (A, B); where
A is a value determined based on the function of the configuration periodicity of the SRS, and B is a value determined based on the function of the DRX cycle.

The value determined based on the function of the configuration periodicity of the SRS may also include the configuration periodicity of the SRS itself. The value determined based on the function of the DRX cycle may also include the DRX cycle itself.

Optionally, the current period of the SRS may alternatively be:
the configuration periodicity of the SRS; and
the DRX cycle.

In some embodiments of the present invention, optionally, the target information includes first information, and the method further includes the following step.

Step 402: Receive first information sent by a network-side device, where the first information includes at least one of the following: DRX configuration information, configuration information of the SRS, a current period of the SRS, indication information for indicating sending or not sending the SRS in the DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal.

The indication information that the terminal has configured DRX may be a DRX command MAC CE or a Long DRX command MAC CE, or may be indication information in RRC.

The indication information that the DRX cycle of the terminal has changed may be RRC configuration information, RRC reconfiguration information, or a SIB message, or may be a control command MAC CE. The foregoing information includes at least information of the DRX cycle, or an implicit indication that the DRX cycle has changed, such as a long DRX command MAC CE that instructs the UE to enter long DRX from short DRX.

The relationship between sending of the SRS and wake-up information and the indication information that the SRS in the current period is not to be sent due to influence of a wake-up signal are used to indicate the relationship between sending of the SRS and the wake-up signal. For example, even if the wake-up signal is configured, sending of the SRS is not related to the wake-up signal, or sending of the SRS is affected by whether the wake-up signal is activated. If the wake-up signal indicates that wake-up is not required at a first active time, the SRS does not need to be sent at the first active time.

In this embodiment of the present invention, optionally, the terminal receives, in at least one of the following manners, the first information sent by the network-side device: RRC configuration, preconfiguration, MAC activation configuration, and DCI indication.

The first information may be preconfigured by using a master information block (Master Information Block, MIB) or a system information block (System Information Block, SIB).

DCI may be DCI monitored in a PDCCH during DRX onDuration before a non-active time (DCI within PDCCH to be monitored by the UE during DRX onDuration before non-active time) or DCI monitored in a PDCCH monitored before DRX configuration.

The MAC activation configuration may be a separate MAC CE, or may be a DRX command MAC CE, or an SRS activation or deactivation MAC CE that uses one bit to describe a relationship between SRS sending behavior and DRX states, for example, 0 or 1 means performing an operation 1; and Nbit is used to describe the current period of the SRS, where Nbit has a correspondence with a period configured in the RRC (for example, T1, T2, or T3).

In the DRX configuration information, the configuration information of the SRS, or other IEs, the first information may be configured by using RRC, for example, indication information indicating whether to send or not to send the SRS in the DRX non-active time.

In this embodiment of the present invention, optionally, the first information may be any combination of the foregoing manners, for example, sending the DRX configuration information and the configuration information of the SRS to the terminal by using RRC, or sending, to the terminal by using a MAC CE, the current period of the SRS, the indication information indicating whether to send or not to send the SRS in the DRX non-active time, or the like. The terminal determines, based on all or part of the first information, whether the terminal sends or does not send the SRS in the DRX non-active time and/or how to send the SRS.

In this embodiment of the present invention, the terminal receives first information sent by the network-side device, so that the terminal can determine, based on the first information, whether to send or not to send the SRS in the DRX non-active time and/or how to send the SRS.

In some embodiments of the present invention, whether to send or not to send the SRS in the DRX non-active time and/or how to send the SRS may be determined by the network-side device, and then indicated to the terminal.

That is, the first information may be indication information for indicating whether to send or not to send the SRS in the DRX non-active time.

In some embodiments of the present invention, whether to send or not to send the SRS in the DRX non-active time and/or how to send the SRS may be determined by the terminal.

The first information may be DRX configuration information, configuration information of the SRS, a current period of the SRS, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal.

The terminal determines, based on the foregoing information, whether to send or not to send the SRS in the DRX non-active time and/or how to send the SRS.

Certainly, whether to send or not to send the SRS in the DRX non-active time and/or how to send the SRS may alternatively be prescribed by a protocol.

In this embodiment of the present invention, optionally, the sending the SRS for positioning based on the DRX-related target information includes: sending the SRS for positioning based on the DRX-related target information in a slot in which the first information is received (for example, a slot in which the DRX configuration information and/or the configuration information of the SRS is received), or in an NT1 time after the first information is received (for example, an NT1 time after DCI is received), or in a next period of the SRS after a slot in which the first information is received (for example, a next period of the SRS after the DRX configuration information and/or the configuration information of the SRS is received or behind a slot of the DCI).

In some embodiments of the present invention, optionally, the target information includes second information, and the method further includes the following step.

Step 403: Receive second information sent by a location management device, where the second information includes at least one of the following: indication information for indicating whether to send or not send an SRS in a DRX non-active time, a current period of the SRS, and a relationship between sending of the SRS and wake-up information

In this embodiment of the present invention, the terminal receives second information sent by a location management device, so that the terminal can determine, based on the second information, whether to send or not to send the SRS in the DRX non-active time and/or how to send the SRS.

In this embodiment of the present invention, optionally, the terminal receives, by using an LPP or an evolved LPP, the second information sent by the location management device.

In this embodiment of the present invention, optionally, the terminal sends an SRS for positioning based on the received first information and second information, for example, the first information includes only the DRX configuration information and the configuration information of the SRS; and the second information includes at least one of the following: indication information for indicating whether to send or not send an SRS in a DRX non-active time, and a current period of the SRS. Based on the indication information for indicating whether to send or not send an SRS in the DRX non-active time, the terminal determines whether to send the SRS, and further determines, based on SRS configuration and the current period of the SRS, how to send the SRS.

In this embodiment of the present invention, optionally, the sending the SRS for positioning based on the DRX-related target information includes: sending the SRS for positioning based on the DRX-related target information in a slot in which the second information is received, or in an NT1 time after the second information is received, or in a next period of the SRS after a slot in which the second information is received.

In the foregoing embodiments, optionally, the DRX configuration information includes at least one of the following: a DRX cycle, configuration information of a DRX onDuration timer, configuration information of a DRX inactivity timer, configuration information of a DRX downlink retransmission timer, configuration information of a DRX uplink retransmission timer, configuration information of a DRX long-cycle start offset timer, configuration information of a DRX short cycle, configuration information of a DRX short-cycle timer, configuration information of a DRX downlink HARQ round-trip transmission time timer, configuration information of a DRX uplink HARQ round-trip transmission time timer, and configuration information of a DRX command MAC CE.

The following describes the DRX timers.

DRX onDuration timer (drx-onDurationTimer): indicates duration of monitoring a PDCCH by the UE in one DRX cycle. Once started, restart midway is not allowed.

DRX inactivity timer (drx-InactivityTimer): indicates duration of monitoring a PDCCH after a PDCCH indicating new transmission is received. The timer starts or restarts at the first symbol after the PDCCH indicating new transmission (UL or DL) is received. The timer stops when a DRX command MAC CE is received.

DRX downlink retransmission timing/DRX uplink retransmission timer (drx-RetransmissionTimerDL/drx-RetransmissionTimerUL): This timer is a per HARQ Process parameter, indicating the maximum number of PDCCH slots (slot) for which the UE needs to continuously perform monitoring for receiving expected downlink retransmission data. The timer starts at the first symbol after the drx-HARQ-RTT-Timer expires. The timer stops when a PDCCH indicating downlink retransmission is received.

DRX long cycle start offset timer (drx-LongCycleStartOffset): may indicate two meanings: longDRX-Cycle and drxStartOffset. If a short cycle (ShortDrx-Cycle) parameter is also configured on the network side, a long cycle needs to be configured to be an integer multiple of a short cycle.

DRX short cycle (drx-ShortCycle): indicates a cycle length of the short DRX-cycle.

DRX short cycle timer (drx-ShortCycleTimer): indicates entering the long cycle after no PDCCH is received for how many short cycles. The timer starts when the drx-inactivity Timer expires and a short cycle is configured. A length of the timer is an integer multiple of the short cycle.

DRX downlink HARQ round-trip transmission time timer/DRX uplink HARQ round-trip transmission time timer (drx-HARQ-RTT-TimerDL/drx-HARQ-RTT-TimerUL): This timer is a Per HARQ Process parameter, indicating a minimum time interval for waiting for retransmission. This timer starts at the first symbol after ACK/NACK transmission ends. During running of the timer, a corresponding MAC does not monitor the PDCCH. When the timer expires, the drx-RetransmissionTimerDL corresponding to a HARQ process starts.

The (long) DRX command MAC CE ((Long) DRX Command MAC CE) is introduced to make the UE enter a sleeping state as quickly as possible. Long CE may be used to stop the drx-ShortCycleTimer and enter the long DRX; and the CE is used to stop the drx-InactivityTimer, to enter short cycle DRX if the short cycle DRX is configured, or enter long cycle DRX if the short cycle DRX is configured.

In the foregoing embodiments, optionally, the current period of the SRS is one of the following:
T2 in a case that DRX has been configured;
T3 in a case that the DRX cycle has changed or the DRX becomes long DRX; and
T1 in a case that the DRX configuration has been cancelled; where
T 1, T2, and T3 are different from each other.

In the foregoing embodiment, optionally, the current period of the SRS is determined based on a function of a configuration periodicity of the SRS and/or a function of the DRX cycle.

For example, the function includes one of the following:
Max (A, B); and
lowest common multiple (A, B); where
A is a value determined based on the function of the configuration periodicity of the SRS, and B is a value determined based on the function of the DRX cycle.

The value determined based on the function of the configuration periodicity of the SRS may also include the configuration periodicity of the SRS itself. The value determined based on the function of the DRX cycle may also include the DRX cycle itself.

In some embodiments of the present invention, the sending the SRS for positioning in the DRX non-active time includes the following step.

Step 411A: Send the SRS only in the DRX non-active time.

The sending the SRS only in the DRX non-active time means not sending the SRS for positioning in a DRX active time.

In this embodiment of the present invention, optionally, the sending the SRS only in the DRX non-active time includes: if a time window for sending the SRS partially overlaps a time window of the DRX active time, cancelling sending the SRS in an overlapping portion.

In this embodiment of the present invention, the location management device may determine, based on the DRX configuration information and the configuration information of the SRS, that the time window for sending the SRS partially overlaps the time window of the DRX active time, so as to cancel measurement on the SRS in the overlapping portion by the neighboring cell.

In some other embodiments of the present invention, the sending the SRS for positioning in the DRX non-active time includes the following step.

Step 411B: Send the SRS for positioning in the DRX non-active time and the DRX active time.

In other words, sending of SRS is not affected by DRX.

In the foregoing embodiments, optionally, the sending the SRS for positioning in the DRX active time includes: canceling sending the SRS if the SRS conflicts with the following information: a PDCCH, a PUCCH, a PUSCH, a PUCCH for dynamic scheduling, a PUSCH for dynamic scheduling, a PUCCH carrying an SR, or retransmission.

However, the sending the SRS for positioning in the DRX active time includes: sending the SRS for positioning only in the DRX active time, and also includes: sending the SRS for positioning in both the DRX non-active time and the DRX active time.

In some embodiments of the present invention, the DRX active time is a first active time, and the first active time is a monitoring time, including at least one of the following times:
a running period of a DRX onDuration timer (drx-onDurationTimer), a DRX inactivity timer (drx-InactivityTimer), a DRX downlink retransmission timer (drx-RetransmissionTimerDL), a DRX uplink retransmission timer (drx-RetransmissionTimerUL), or a random access contention resolution timer (ra-ContentionResolutionTimer);
a time when a scheduling request is sent on the PUCCH and is pending (a Scheduling Request is sent on PUCCH and is pending); and
a time when a PDCCH indicating a new transmission addressed to a cell radio network temporary identifier of a MAC entity has not been received after successful reception of a random access response for a random access preamble not selected by the MAC entity in contention-based random access preambles (a PDCCH indicating a new transmission addressed to the C-RNTI of the MAC entity has not been received after successful reception of a Random Access Response for the Random Access Preamble not selected by the MAC entity among the contention-based Random Access Preamble).

In some other embodiments of the present invention, the DRX active time is a second active time, the second active time is a first active time after a wake-up signal (WUS) is detected, and the first active time includes at least one of the following times:
a running period of a DRX onDuration timer (drx-onDurationTimer), a DRX inactivity timer (drx-InactivityTimer), a DRX downlink retransmission timer (drx-RetransmissionTimerDL), a DRX uplink retransmission timer (drx-RetransmissionTimerUL), or a random access contention resolution timer (ra-ContentionResolutionTimer).
a time when a scheduling request is sent on the PUCCH and is pending; and
a time when a PDCCH indicating a new transmission addressed to a cell radio network temporary identifier of a MAC entity has not been received after successful reception of a random access response for a random access preamble not selected by the MAC entity in contention-based random access preambles.

In the embodiments of the present invention, optionally, the sending the SRS for positioning in the DRX active time includes: if no wake-up signal is detected, sending, to the location management device, indication information for indicating that the SRS in the current period is not to be sent due to influence of a wake-up signal.

In other words, if no wake-up signal is detected, the SRS is not sent even in the first active time.

The sending the SRS for positioning in the DRX active time includes: sending the SRS for positioning only in the DRX active time, and also includes: sending the SRS for positioning in both the DRX non-active time and the DRX active time.

After receiving the indication information for indicating that the SRS in the current period is not to be sent due to influence of the wake-up signal, the location management device may cancel SRS measurement of the neighboring cell, or forward the indication information to the neighboring cell, and based on the indication information, the neighboring cell may not measure the SRS.

Referring to FIG. 5, FIG. 5 illustrates a method for sending an SRS according to an embodiment of the present invention. The method is applied to a terminal and includes the following step.

Step 51: Send an SRS for positioning only in an RRC connected state, or send an SRS for positioning in an RRC non-connected state.

The RRC non-connected state may be an RRC idle state (idle) or an RRC inactive state (inactive).

The sending an SRS for positioning only in an RRC connected state means not sending the SRS for positioning in an RRC non-connected state.

However, the sending an SRS for positioning in an RRC non-connected state may include: sending the SRS for positioning only in the RRC non-connected state, or sending the SRS for positioning in the RRC non-connected state and the RRC connected state.

In this embodiment of the present invention, the manner of sending the SRS for positioning in the RRC non-connected state is clear, so that a neighboring cell does not perform SRS measurement when UE sends no SRS, thereby avoiding waste of resources.

In this embodiment of the present invention, optionally, if the SRS for positioning is sent in the RRC non-connected state and the RRC connected state, a periodicity of the SRS in the RRC non-connected state is different from a periodicity of the SRS in the RRC connected state.

In this embodiment of the present invention, optionally, if the SRS for positioning is sent in the RRC non-connected state and the RRC connected state, a periodicity of the SRS in the RRC non-connected state is greater than a periodicity of the SRS in the RRC connected state. That is, in the RRC non-connected state, the terminal relaxes sending the SRS.

In this embodiment of the present invention, optionally, the method for sending an SRS further includes the following step.

Step 50: Send RRC state indicator information to a location management device.

Optionally, the RRC state indicator information includes at least one of the following: indication information for indicating the location management device to cancel, reconfigure, or re-request measurement on the SRS by the neighboring cell, relationship information between sending of the SRS and an RRC connected state, and RRC connection state information.

Alternatively, the location management device may be implicitly notified to cancel, reconfigure, or re-request measurement on the SRS by the neighboring cell. That is, when the RRC connection state information in the RRC state indicator information indicates that the terminal is in an RRC idle state or an RRC inactive state, the location management device is implicitly notified to cancel, reconfigure, or re-request measurement on the SRS by the neighboring cell.

Optionally, the terminal sends the RRC state indicator information to the location management device by using an LPP or an evolved LPP.

In this embodiment of the present invention, the terminal sends the RRC state indicator information to the location management device, so that the location management device can determine, based on the RRC state indicator information, whether the terminal in the RRC non-connected state sends or does not send the SRS. For example, when the terminal sends no SRS, the location management device may cancel, reconfigure, or re-request measurement on the SRS by the neighboring cell, so that the neighboring cell does not perform SRS measurement when the UE sends no SRS, thereby avoiding waste of resources.

Referring to FIG. 6, FIG. 6 illustrates a method for sending an SRS according to an embodiment of the present invention. The method is applied to a network-side device and includes the following step.

Step 61: Send first information to a terminal, a location management device, or a neighboring cell, where the first information includes at least one of the following: DRX configuration information, configuration information of the SRS, a current period of the SRS, indication information for indicating sending or not sending the SRS in a DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and the first information is used to determine at least one of the following: whether the terminal sends or does not send the SRS in the DRX non-active time and how to send the SRS.

Optionally, the DRX configuration information includes at least one of the following: a DRX cycle, configuration information of a DRX onDuration timer, configuration information of a DRX inactivity timer, configuration information of a DRX downlink retransmission timer, configuration information of a DRX uplink retransmission timer, configuration information of a DRX long-cycle start offset timer, configuration information of a DRX short cycle, configuration information of a DRX short-cycle timer, configuration information of a DRX downlink HARQ round-trip transmission time timer, configuration information of a DRX uplink HARQ round-trip transmission time timer, and configuration information of a DRX command MAC CE.

Optionally, the network-side device sends the first information to the terminal in one of the following manners: RRC configuration, pre-configuration, MAC activation configuration, and DCI indication.

Optionally, the network-side device sends the first information to the location management device by using an LPPA, an evolved LPPA, an NRPPA, or an evolved NRPPA.

Optionally, the network-side device sends the first information to the neighboring cell by using an X2 protocol.

Optionally, the current period of the SRS is one of the following:
T2 in a case that the terminal has configured DRX;
T3 in a case that a DRX cycle of the terminal has changed; and
T1 in a case that the terminal cancels DRX configuration; where
T 1, T2, and T3 are different from each other.

Optionally, the current period of the SRS is determined based on a function of a configuration periodicity of the SRS and/or a function of the DRX cycle.

Optionally, the function is one of the following:
Max (A, B); and
lowest common multiple (A, B); where
A is a value determined based on the function of the configuration periodicity of the SRS, and B is a value determined based on the function of the DRX cycle.

Referring to FIG. 7, FIG. 7 illustrates a method for sending an SRS according to an embodiment of the present invention. The method is applied to a network-side device and includes the following step.

Step 71: Receive second information sent by a location management device, where the second information includes at least one of the following: indication information for indicating sending or not sending an SRS for positioning in a DRX non-active time, a current period of the SRS, and a relationship between sending of the SRS and wake-up information.

Optionally, the network-side device receives, by using an LPPA, an evolved LPPA, an NRPPA, or an evolved NRPPA, the second information sent by the location management device.

Optionally, the current period of the SRS is one of the following:
T2 in a case that the terminal has configured DRX;
T3 in a case that a DRX cycle of the terminal has changed; and
T1 in a case that the terminal cancels DRX configuration; where
T 1, T2, and T3 are different from each other.

Optionally, the current period of the SRS is determined based on a function of a configuration periodicity of the SRS and/or a function of the DRX cycle.

Optionally, the function is one of the following:
Max (A, B); and
lowest common multiple (A, B); where
A is a value determined based on the function of the configuration periodicity of the SRS, and B is a value determined based on the function of the DRX cycle.

Referring to FIG. 8, FIG. 8 illustrates a method for sending an SRS according to an embodiment of the present invention. The method is applied to a network-side device and includes the following step.

Step 81: Send third information to a terminal, a location management device, or a neighboring cell, where the third information includes at least one of the following: configuration information of an SRS for positioning and RRC state indicator information; and the third information is used to determine: whether the terminal sends or does not send the SRS in an RRC non-connected state.

Optionally, the network-side device sends the third information to the terminal in one of the following manners: RRC configuration, pre-configuration, MAC activation configuration, and DCI indication.

Optionally, the network-side device sends the third information to the location management device by using an LPPA, an evolved LPPA, an NRPPA, or an evolved NRPPA.

Optionally, the network-side device sends the third information to the neighboring cell by using an X2 protocol.

Optionally, the RRC state indicator information includes at least one of the following: indication information for indicating the location management device to cancel, reconfigure, or re-request measurement on the SRS by the neighboring cell, relationship information between sending of the SRS and an RRC connected state, and RRC connection state information.

Referring to FIG. 9, FIG. 9 illustrates a method for sending an SRS according to an embodiment of the present invention. The method is applied to a location management device and includes the following steps.

Step 91: Receive first information, where the first information includes at least one of the following: DRX configuration information, configuration information of the SRS, a current period of the SRS, indication information for indicating sending or not sending the SRS in a DRX non-active time, indication information that a terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal.

Step 92: Determine at least one of the following based on the first information: whether the terminal sends or does not send an SRS for positioning in the DRX non-active time and how to send the SRS. Optionally, the location management device receives, by using an LPPA, an evolved LPPA, an NRPPA, or an evolved NRPPA, the first information sent by a network-side device or the terminal.

Optionally, the method further includes:
sending first indication information to a neighboring cell, where the first indication information is used to cancel, reconfigure, or re-request measurement on the SRS by the neighboring cell;
and/or
sending a location request or a measurement request to a neighboring cell, where the request includes a measurement period or a reporting period, and the measurement period or reporting period is the current period of the SRS or a period determined by the location management device.

Referring to FIG. 10, FIG. 10 illustrates a method for sending an SRS according to an embodiment of the present invention. The method is applied to a location management device and includes the following step.

Step 101: Send second information to a network-side device or a terminal, where the second information includes at least one of the following: indication information for indicating sending or not sending an SRS for positioning in a DRX non-active time, a current period of the SRS, and a relationship between sending of the SRS and wake-up information.

In other words, the location manager device determines whether the terminal sends or does not send an SRS for positioning in the DRX non-active time and how to send the SRS; and notifies the network-side device or the terminal by using the second information.

Optionally, the location management device sends the second information to the network-side device by using an LPPA, an evolved LPPA, an NRPPA, or an evolved NRPPA.

Optionally, the location management device sends the second information to the terminal by using an LPP.

Optionally, the method further includes:
sending first indication information to a neighboring cell, where the first indication information is used to cancel, reconfigure, or re-request measurement on the SRS by the neighboring cell; and/or
sending a location request or a measurement request to a neighboring cell, where the request includes a measurement period or a reporting period, and the measurement period or reporting period is the current period of the SRS or a period determined by the location management device.

Referring to FIG. 11, FIG. 11 illustrates a method for sending an SRS according to an embodiment of the present invention. The method is applied to a location management device and includes the following steps.

Step 111: Receive third information, where the third information includes at least one of the following: configuration information of an SRS for positioning and RRC state indicator information; and the third information is used to determine: whether the terminal sends or does not send the SRS in an RRC non-connected state.

Step 112: Determine, based on the third information, whether the terminal sends or does not send the SRS for positioning in the RRC non-connected state.

Optionally, the location management device receives third information sent by a network-side device by using an LPPA, an evolved LPPA, an NRPPA, or an evolved NRPPA.

Optionally, the location management device sends the third information to the terminal by using an LPP.

Optionally, the method further includes:
sending first indication information to a neighboring cell, where the first indication information is used to cancel, reconfigure, or re-request measurement on the SRS by the neighboring cell; and/or
sending a location request or a measurement request to a neighboring cell, where the request includes a measurement period or a reporting period, and the measurement period or reporting period is the current period of the SRS or a period determined by the location management device.

The following describes a flow of interaction between a terminal, a serving cell, a location management device, and a neighboring cell in the embodiments of the present invention with reference to specific embodiments.

Referring to FIG. 12, in some embodiments of the present invention, a procedure of interaction between the terminal, the serving cell, the location management device, and the neighboring cell is as follows:
Step 121: The serving cell sends, to the terminal, configuration information of an SRS for positioning and DRX configuration information.
Step 122: Based on the configuration information of the SRS and the DRX configuration information, the terminal determines the DRX configuration information or a current period of the SRS.
Step 123: The terminal sends the DRX configuration information or SRS period change information to the location management device by using an LPP.
Step 124: The location management device notifies the neighboring cell of the DRX configuration information or the current period of the SRS by using an NRPPA.
Step 125: The terminal sends an SRS for positioning based on DRX-related target information.
Step 126: The location management device requests the neighboring cell by using the NRPPA to report a measurement result of the SRS.
Step 127: The location management device requests the serving cell by using the NRPPA to report a measurement result of the SRS.
Step 128: The neighboring cell changes a measurement and/or reporting periodicity of the SRS.

Referring to FIG. 13, in some embodiments of the present invention, a procedure of interaction between the terminal, the serving cell, the location management device, and the neighboring cell is as follows:
Step 131: The serving cell sends, to the terminal, configuration information of an SRS for positioning and DRX configuration information.
Step 132: Based on the configuration information of the SRS and the DRX configuration information, the serving cell determines the DRX configuration information or a current period of the SRS.
Step 133: The serving cell sends the DRX configuration information or the current period of the SRS to the terminal.
Step 134: The serving cell sends the DRX configuration information or the current period of the SRS to the location management device by using an NRPPA.
Step 135: The location management device sends the DRX configuration information or SRS period change information to the neighboring cell by using an NRPPA.
Step 136: The serving cell sends the DRX configuration information or SRS period change information to the neighboring cell by using an X2 protocol.

Only one of steps 134, 135, and 136 may be performed, or the steps may be performed simultaneously.

Step 137: The terminal sends an SRS for positioning based on DRX-related target information.

Step 138: The location management device requests the neighboring cell by using the NRPPA to report a measurement result of the SRS.

Step 139: The location management device requests the serving cell by using the NRPPA to report a measurement result of the SRS.

Step 1310: The neighboring cell changes a measurement and/or reporting periodicity of the SRS.

Step 1311: The serving cell changes a measurement and/or reporting periodicity of the SRS.

Referring to FIG. 14, an embodiment of the present invention further provides a terminal 140, including:
a first sending module 141, configured to send an SRS for positioning based on DRX-related target information and/or an RRC status.

In this embodiment of the present invention, it is clear that a manner of sending an SRS is determined based on the DRX-related target information and/or the RRC status, so that a neighboring cell can skip performing SRS measurement when the UE sends no SRS, thereby avoiding waste of resources.

In some embodiments of the present invention, the first sending module 141 is configured to send the SRS for positioning only in a DRX active time, or send the SRS for positioning in a DRX non-active time.

Optionally, the SRS includes at least one of the following: an aperiodic SRS, a periodic SRS, and a semi-static SRS.

Optionally, the target information includes first information, and the terminal 140 further includes:
a second sending module, configured to send the first information to a location management device, where the first information includes at least one of the following: DRX configuration information, configuration information of the SRS, a current period of the SRS, indication information for indicating sending or not sending the SRS in the DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal.

Optionally, the first information is sent to the location management device by using an LPP or evolved LPP.

Optionally, the target information includes first information, and the terminal 140 further includes:
a first receiving module, configured to receive first information sent by a network-side device, where the first information includes at least one of the following: DRX configuration information, configuration information of an SRS, a current period of the SRS, indication information for indicating sending or not sending the SRS in a DRX non-active time, indication information that the terminal has configured DRX, indication information that a DRX cycle of a terminal has changed, indication information that the terminal has cancelled DRX configuration, a relationship between sending of the SRS and wake-up information, and indication information that the SRS in the current period is not to be sent due to influence of a wake-up signal.

Optionally, the first information sent by the network-side device is received in one of the following manners: RRC configuration, pre-configuration, MAC activation configuration, and DCI indication.

The first sending module is configured to send the SRS for positioning based on the DRX-related target information in a slot in which the first information is received, or in an NT1 time after the first information is received, or in a next period of the SRS after a slot in which the first information is received.

Optionally, the target information includes second information, and the terminal 140 further includes:
a second receiving module, configured to receive second information sent by a location management device, where the second information includes at least one of the following: indication information for indicating whether to send or not send an SRS in a DRX non-active time, a current period of the SRS, and a relationship between sending of the SRS and wake-up information.

Optionally, the second information sent by the location management device is received by using an LPP or evolved LPP.

Optionally, the first sending module is configured to send the SRS for positioning based on the DRX-related target information in a slot in which the second information is received, or in an NT1 time after the second information is received, or in a next period of the SRS after a slot in which the second information is received.

Optionally, in the foregoing embodiments, the DRX configuration information includes at least one of the following: a DRX cycle, configuration information of a DRX onDuration timer, configuration information of a DRX inactivity timer, configuration information of a DRX downlink retransmission timer, configuration information of a DRX uplink retransmission timer, configuration information of a DRX long-cycle start offset timer, configuration information of a DRX short cycle, configuration information of a DRX short-cycle timer, configuration information of a DRX downlink HARQ round-trip transmission time timer, configuration information of a DRX uplink HARQ round-trip transmission time timer, and configuration information of a DRX command MAC CE.

Optionally, in the foregoing embodiments, the current period of the SRS is one of the following:
T2 in a case that DRX has been configured;
T3 in a case that the DRX cycle has changed or the DRX becomes long DRX; and
T1 in a case that the DRX configuration has been cancelled; where
T1, T2, and T3 are different from each other.

Optionally, the current period of the SRS is determined based on a function of a configuration periodicity of the SRS and/or a function of the DRX cycle.

Optionally, the function includes one of the following:
Max (A, B); and
lowest common multiple (A, B); where
A is a value determined based on the function of the configuration periodicity of the SRS, and B is a value determined based on the function of the DRX cycle.

Optionally, the first sending module includes:
a first sending subunit, configured to send the SRS only in the DRX non-active time; or
a second sending subunit, configured to send the SRS for positioning in the DRX non-active time and the DRX active time.

Optionally, the first sending subunit is configured to: if a time window for sending the SRS partially overlaps a time window of the DRX active time, cancel sending the SRS in an overlapping portion.

Optionally, the first sending subunit is configured to: cancel sending the SRS if an SRS packet for positioning is sent in the DRX active time and the SRS conflicts with the following information: a PDCCH, a PUCCH, a PUSCH, a PUCCH for dynamic scheduling, a PUSCH for dynamic scheduling, a PUCCH carrying an SR, or retransmission.

Optionally, the DRX active time is a first active time, and the first active time includes at least one of the following times:
a running period of a DRX onDuration timer drx-onDurationTimer, a DRX inactivity timer drx-InactivityTimer, a DRX downlink retransmission timer drx-RetransmissionTimerDL, a DRX uplink retransmission timer drx-RetransmissionTimerUL, or a random access contention resolution timer ra-ContentionResolutionTimer;
a time when a scheduling request is sent on the PUCCH and is pending; and
a time when a PDCCH indicating a new transmission addressed to a cell radio network temporary identifier of a MAC entity has not been received after successful reception of a random access response for a random access preamble not selected by the MAC entity in contention-based random access preambles.

Optionally, the DRX active time is a second active time, the second active time is a first active time after a wake-up signal is detected, and the first active time includes at least one of the following times:
a running period of a DRX onDuration timer drx-onDurationTimer, a DRX inactivity timer drx-InactivityTimer, a DRX downlink retransmission timer drx-RetransmissionTimerDL, a DRX uplink retransmission timer drx-RetransmissionTimerUL, or a random access contention resolution timer ra-ContentionResolutionTimer;
a time when a scheduling request is sent on the PUCCH and is pending; and
a time when a PDCCH indicating a new transmission addressed to a cell radio network temporary identifier of a MAC entity has not been received after successful reception of a random access response for a random access preamble not selected by the MAC entity in contention-based random access preambles.

Optionally, the first sending module is configured to: if the SRS for positioning is sent in the DRX active time and no wake-up signal is detected, send, to the location management device, indication information for indicating that the SRS in the current period is not to be sent due to influence of a wake-up signal.

The terminal provided in this embodiment of the present invention is capable of implementing the processes implemented by the terminal in the method embodiment in FIG. 4. To avoid repetition, details are not described herein again.

In some embodiments of the present invention, the first sending module 141 is configured to send the SRS for positioning only in an RRC connected state, or send the SRS for positioning in an RRC non-connected state.

Optionally, a periodicity of the SRS in the RRC non-connected state is different from a periodicity of the SRS in the RRC connected state.

Optionally, a periodicity of the SRS in the RRC non-connected state is greater than a periodicity of the SRS in the RRC connected state.

Optionally, the terminal further includes:
a third sending module, configured to send RRC state indicator information to the location management device.

Optionally, the RRC state indicator information includes at least one of the following: indication information for indicating the location management device to cancel, reconfigure, or re-request measurement on the SRS by a neighboring cell, relationship information between sending of the SRS and an RRC connected state, and RRC connection state information.

Optionally, the third sending module sends the RRC state indicator information to the location management device by using an LPP or evolved LPP.

The terminal provided in this embodiment of the present invention is capable of implementing the processes implemented by the terminal in the method embodiment in FIG. 5. To avoid repetition, details are not described herein again.

Referring to FIG. 15, an embodiment of the present invention further provides a network-side device 160, including:
a first sending module 161, configured to send first information to a terminal, a location management device, or a neighboring cell, where the first information includes at least one of the following: DRX configuration information, configuration information of an SRS, a current period of the SRS, indication information for indicating sending or not sending the SRS in a DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and the first information is used to determine at least one of the following: whether the terminal sends or does not send the SRS in the DRX non-active time and how to send the SRS.

Optionally, the DRX configuration information includes at least one of the following: a DRX cycle, configuration information of a DRX onDuration timer, configuration information of a DRX inactivity timer, configuration information of a DRX downlink retransmission timer, configuration information of a DRX uplink retransmission timer, configuration information of a DRX long-cycle start offset timer, configuration information of a DRX short cycle, configuration information of a DRX short-cycle timer, configuration information of a DRX downlink HARQ round-trip transmission time timer, configuration information of a DRX uplink HARQ round-trip transmission time timer, and configuration information of a DRX command MAC CE.

Optionally, the first information is sent to the terminal in one of the following manners: RRC configuration, pre-configuration, MAC activation configuration, and DCI indication.

Optionally, the first information is sent to the location management device by using an LPPA, an evolved LPPA, an NRPPA, or an evolved NRPPA.

Optionally, the first information is sent to the neighboring cell by using an X2 protocol.

Optionally, the current period of the SRS is one of the following:
T2 in a case that the terminal has configured DRX;
T3 in a case that a DRX cycle of the terminal has changed; and
T1 in a case that the terminal cancels DRX configuration; where
T 1, T2, and T3 are different from each other.

Optionally, the current period of the SRS is determined based on a function of a configuration periodicity of the SRS and/or a function of the DRX cycle.

Optionally, the function is one of the following:
Max (A, B); and
lowest common multiple (A, B); where
A is a value determined based on the function of the configuration periodicity of the SRS, and B is a value determined based on the function of the DRX cycle.

The terminal provided in this embodiment of the present invention is capable of implementing the processes implemented by the terminal in the method embodiment in FIG. 6. To avoid repetition, details are not described herein again.

Referring to FIG. 16, an embodiment of the present invention further provides a network-side device 170, including:
a receiving module, configured to receive second information sent by a location management device, where the second information includes at least one of the following: indication information for indicating sending or not sending an SRS for positioning in a DRX non-active time, a current period of the SRS, and a relationship between sending of the SRS and wake-up information.

Optionally, the second information sent by the location management device is received by using an LPPA, an evolved LPPA, an NRPPA, or an evolved NRPPA.

The terminal provided in this embodiment of the present invention is capable of implementing the processes implemented by the terminal in the method embodiment in FIG. 7. To avoid repetition, details are not described herein again.

Referring to FIG. 17, an embodiment of the present invention further provides a network-side device 180, including:
a second sending module 181, configured to send third information to a terminal, a location management device, or a neighboring cell, where the third information includes at least one of the following: configuration information of an SRS for positioning and RRC state indicator information; and the third information is used to determine: whether the terminal sends or does not send the SRS in an RRC non-connected state.

Optionally, the third information is sent to the terminal in one of the following manners: RRC configuration, pre-configuration, MAC activation configuration, and DCI indication.

Optionally, the third information is sent to the location management device by using an LPPA, an evolved LPPA, an NRPPA, or an evolved NRPPA.

Optionally, the third information is sent to the neighboring cell by using an X2 protocol.

Optionally, the RRC state indicator information includes at least one of the following: indication information for indicating the location management device to cancel, reconfigure, or re-request measurement on the SRS by a neighboring cell, relationship information between sending of the SRS and an RRC connected state, and RRC connection state information.

The terminal provided in this embodiment of the present invention is capable of implementing the processes implemented by the terminal in the method embodiment in FIG. 8. To avoid repetition, details are not described herein again.

Referring to FIG. 18, an embodiment of the present invention further provides a location management device 190, including:
a first receiving module 191, configured to receive first information, where the first information includes at least one of the following: DRX configuration information, configuration information of an SRS, a current period of the SRS, indication information for indicating sending or not sending the SRS in a DRX non-active time, indication information that a terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and
a first determining module 192, configured to determine at least one of the following based on the first information: whether the terminal sends or does not send an SRS for positioning in the DRX non-active time and how to send the SRS.

Optionally, the first information sent by the network-side device or the terminal is received by using an LPPA, an evolved LPPA, an NRPPA, or an evolved NRPPA.

Optionally, the location management device further includes:
a first sending module, configured to send first indication information to a neighboring cell, where the first indication information is used to cancel, reconfigure, or re-request measurement on the SRS by the neighboring cell;
and/or
a second sending module, configured to send a location request or a measurement request to a neighboring cell, where the request includes a measurement period or a reporting period, and the measurement period or reporting period is the current period of the SRS or a period determined by the location management device.

The terminal provided in this embodiment of the present invention is capable of implementing the processes implemented by the terminal in the method embodiment in FIG. 9. To avoid repetition, details are not described herein again.

Referring to FIG. 19, an embodiment of the present invention further provides a location management device 200, including:
a sending module 201, configured to send second information to a network-side device or a terminal, where the second information includes at least one of the following: indication information for indicating sending or not sending an SRS for positioning in a DRX non-active time, a current period of the SRS, and a relationship between sending of the SRS and wake-up information.

Optionally, the second information is sent to the network-side device by using an LPPA, an evolved LPPA, an NRPPA, or an evolved NRPPA.

Optionally, the second information is sent to the network terminal by using an LPP or an evolved LPP.

Optionally, the location management device further includes:
a first sending module, configured to send first indication information to a neighboring cell, where the first indication information is used to cancel, reconfigure, or re-request measurement on the SRS by the neighboring cell; and/or
a second sending module, configured to send a location request or a measurement request to a neighboring cell, where the request includes a measurement period or a reporting period, and the measurement period or reporting period is the current period of the SRS or a period determined by the location management device.

The terminal provided in this embodiment of the present invention is capable of implementing the processes implemented by the terminal in the method embodiment in FIG. 10. To avoid repetition, details are not described herein again.

Referring to FIG. 20, an embodiment of the present invention further provides a location management device 210, including:
a second receiving module 211, configured to receive third information, where the third information includes at least one of the following: configuration information of an SRS for positioning and RRC state indication information, and the third information is used to determine whether the terminal sends or does not send the SRS in an RRC non-connected state; and
a second determining module 212, configured to determine, based on the third information, whether the terminal sends or does not send the SRS for positioning in the RRC non-connected state.

Optionally, third information sent by a network-side device or a terminal is received by using an LPPA, an evolved LPPA, an NRPPA, or an evolved NRPPA.

Optionally, the third information sent by the terminal is received by using an LPP or an evolved LPP.

Optionally, the location management device further includes:
a first sending module, configured to send first indication information to a neighboring cell, where the first indication information is used to cancel, reconfigure, or re-request measurement on the SRS by the neighboring cell; and/or
a second sending module, configured to send a location request or a measurement request to a neighboring cell, where the request includes a measurement period or a reporting period, and the measurement period or reporting period is the current period of the SRS or a period determined by the location management device.

The terminal provided in this embodiment of the present invention is capable of implementing the processes implemented by the terminal in the method embodiment in FIG. 11. To avoid repetition, details are not described herein again.

FIG. 21 is a schematic structural diagram of hardware of a terminal for implementing the embodiments of the present invention. The terminal 220 includes but is not limited to components such as a radio frequency unit 221, a network module 222, an audio output unit 223, an input unit 224, a sensor 225, a display unit 226, a user input unit 227, an interface unit 228, a memory 229, a processor 2210, and a power supply 2211. A person skilled in the art may understand that the structure of the terminal shown in FIG. 22 does not constitute any limitation on the terminal device. The terminal may include more or fewer components than those shown in the figure, or a combination of some components, or the components disposed differently. In this embodiment of the present invention, the terminal includes, but is not limited to, a mobile phone, a tablet computer, a laptop computer, a personal digital assistant, an in-vehicle terminal, a wearable device, a pedometer, and the like.

The processor 2210 is configured to send an SRS for positioning based on DRX-related target information and/or an RRC status.

The terminal provided in this embodiment of the present invention is capable of implementing the processes implemented by the terminal in the method embodiment in FIG. 4A to FIG. 5. To avoid repetition, details are not described herein again.

It should be understood that in this embodiment of the present invention, the radio frequency unit 221 may be configured to: receive and transmit signals in an information receiving/sending process or a call process; and specifically, after receiving downlink data from a base station, transmit the downlink information to the processor 2210 for processing, and in addition, transmit uplink data to the base station. Generally, the radio frequency unit 221 includes but is not limited to an antenna, at least one amplifier, a transceiver, a coupler, a low noise amplifier, a duplexer, and the like. In addition, the radio frequency unit 221 may also communicate with a network and other devices via a wireless communications system.

The terminal provides a user with wireless broadband internet access through the network module 222, for example, helping the user to transmit and receive e-mails, browse web pages, and access streaming media.

The audio output unit 223 may convert audio data received by the radio frequency unit 221 or the network module 222 or stored in the memory 229 into an audio signal and output the audio signal as a sound. Furthermore, the audio output unit 223 may also provide audio output (for example, a call signal received sound or a message received sound) related to a specific function performed by the terminal 220. The audio output unit 223 includes a speaker, a buzzer, a receiver, and the like.

The input unit 224 is configured to receive an audio or video signal. The input unit 224 may include a graphics processing unit (Graphics Processing Unit, GPU) 2241 and a microphone 2242. The graphics processing unit 2241 processes image data of a still picture or a video obtained by an image capture apparatus (for example, a camera) in an image capture mode or a video capture mode. A processed image frame may be displayed on the display unit 226. The image frame processed by the graphics processing unit 2241 may be stored in the memory 229 (or another storage medium) or be transmitted by the radio frequency unit 221 or the network module 222. The microphone 2242 is capable of receiving sounds and processing such sounds into audio data. The processed audio data may be converted in a telephone call mode into a format that can be transmitted by the radio frequency unit 221 to a mobile communications base station, for outputting.

The terminal 220 further includes at least one sensor 225, for example, an optical sensor, a motion sensor, and other sensors. Specifically, the optical sensor may include an ambient light sensor and a proximity sensor. The ambient light sensor may adjust luminance of the display panel 2261 based on brightness of ambient light, and the proximity sensor may turn off the display panel 2261 and/or backlight when the terminal 220 moves close to an ear. As a type of motion sensor, an accelerometer sensor can detect magnitudes of accelerations in all directions (usually three axes), can detect a magnitude and a direction of gravity when the terminal 200 is in a static state, and can be applied to posture recognition (such as screen switching between portrait and landscape, related games, and magnetometer posture calibration) of the terminal, functions related to vibration recognition (such as pedometer and tapping), and the like. The sensor 225 may also include a fingerprint sensor, a pressure sensor, an iris sensor, a molecular sensor, a gyroscope, a barometer, a hygrometer, a thermometer, an infrared sensor, and the like. Details are not described herein.

The display unit 226 is configured to display information input by the user or information provided to the user. The display unit 226 may include a display panel 2261, and the display panel 2261 may be configured in a form of a liquid crystal display (Liquid Crystal Display, LCD), an organic light-emitting diode (Organic Light-Emitting Diode, OLED), or the like.

The user input unit 227 may be configured to: receive a digit or character information that is input, and generate signal input related to user settings and function control of the terminal. Specifically, the user input unit 227 may include a touch panel 2271 and other input devices 2272. The touch panel 2271 is also referred to as a touchscreen and can collect a touch operation (such as an operation performed by the user on the touch panel 2271 or near the touch panel 2271 with a finger or by using any proper object or accessory such as a stylus) of the user on or near the touch panel 2271. The touch panel 2271 may include two parts: a touch detection apparatus and a touch controller. The touch detection apparatus detects a touch azimuth of a user, detects a signal brought by a touch operation, and transmits the signal to the touch controller. The touch controller receives touch information from the touch detection apparatus, converts the touch information into touchpoint coordinates, and transmits the touchpoint coordinates to the processor 2210, and can receive a command transmitted by the processor 2210 and execute the command. In addition, the touch panel 2271 may be implemented in a plurality of forms, for example, as a resistive, capacitive, infrared, or surface acoustic wave touch panel. The user input unit 227 may further include the other input devices 2272 in addition to the touch panel 2271. Specifically, the other input devices 2272 may include but are not limited to a physical keyboard, a function key (such as a volume control key or an on/off key), a trackball, a mouse, and a joystick. Details are not described herein.

Further, the touch panel 2271 may cover the display panel 2261. When detecting a touch operation on or near the touch panel 2271, the touch panel 2271 transmits the touch operation to the processor 2210 to determine a type of a touch event. Then, the processor 2210 provides a corresponding visual output on the display panel 2261 based on the type of the touch event. In FIG. 22, the touch panel 2271 and the display panel 2261 serve as two independent components to implement input and output functions of the terminal. In some embodiments, however, the touch panel 2271 may be integrated with the display panel 2261 to implement the input and output functions of the terminal. This is not specifically limited herein.

The interface unit 228 is an interface between an external apparatus and the terminal 220. For example, the external apparatus may include a wired or wireless headphone port, an external power (or battery charger) port, a wired or wireless data port, a memory card port, a port for connecting an apparatus provided with a recognition module, an audio input/output (I/O) port, a video I/O port, an earphone port, and the like. The interface unit 228 may be configured to: receive input (for example, data information and power) from the external apparatus, and transmit the received input to one or more elements in the terminal 220, or may be configured to transmit data between the terminal 220 and the external apparatus.

The memory 229 may be configured to store software programs and various data. The memory 229 may mainly include a program storage area and a data storage area. The program storage area may store an operating system, and an application program required by at least one function (for example, a sound playback function or an image playback function). The data storage area may store data (for example, audio data or a phone book) created according to use of the mobile phone. In addition, the memory 229 may include a high-speed random access memory, and may further include a non-volatile memory such as at least one disk storage device, a flash memory device, or another volatile solid-state storage device.

The processor 2210 is a control center of the terminal, and is connected to all components of the terminal by using various interfaces and lines. By running or executing a software program and/or module that is stored in the memory 229 and calling data stored in the memory 229, the processor 2210 executes various functions of the terminal and processes data, so as to perform overall monitoring on the terminal. The processor 2210 may include one or more processing units. Preferably, the processor 2210 may integrate an application processor and a modem processor. The application processor mainly processes the operating system, a user interface, an application program, and the like. The modem processor mainly processes wireless communication. It can be understood that the modem processor may alternatively be not integrated in the processor 2210.

The terminal 220 may further include the power supply 2211 (such as a battery) supplying power to each component. Preferably, the power supply 2211 may be logically connected to the processor 2210 by using a power management system, so that functions such as charge and discharge management and power consumption management are implemented by using the power management system.

In addition, the terminal 220 includes some functional modules that are not illustrated. Details are not described herein.

Referring to FIG. 22, an embodiment of the present invention further provides a terminal 230, including a processor 231, a memory 232, and a computer program stored in the memory 232 and capable of running on the processor 231. When the computer program is executed by the processor 231, the processes in the foregoing embodiment of the method for sending an SRS applied to the terminal are implemented, with the same technical effects achieved. To avoid repetition, details are not described again herein.

Referring to FIG. 23, an embodiment of the present invention further provides a network-side device 240, including a processor 241, a memory 242, and a computer program stored in the memory 242 and capable of running on the processor 241. When the computer program is executed by the processor 241, the processes in the foregoing embodiment of the method for sending an SRS applied to the network-side device are implemented, with the same technical effects achieved. To avoid repetition, details are not described again herein.

Referring to FIG. 24, an embodiment of the present invention further provides a location management device 250, including a processor 251, a memory 252, and a computer program stored in the memory 252 and capable of running on the processor 251. When the computer program is executed by the processor 251, the processes in the foregoing embodiment of the method for measuring an SRS applied to the location management device are implemented, with the same technical effects achieved. To avoid repetition, details are not described again herein.

Referring to FIG. 25, the present invention further provides a positioning method, applied to a communications device and including:
Step 261: Send RRC state indicator information to a location management device, where the communications device is a terminal or a network-side device, and the RRC state indicator information includes at least RRC connection state information.

The RRC connection state information includes: that the terminal is in an RRC connected state, or that the terminal is in an RRC idle state or an RRC inactive state.

In some embodiments of the present invention, optionally, the method further includes:
sending at least one of the following to the location management device: positioning reference signal PRS measurement information and location information of the terminal.

Optionally, the terminal sends the RRC state indicator information to the location management device by using an LPP or evolved LPP.

The network-side device sends the RRC state indicator information to the location management device by using an LPPA, an evolved LPPA, an NRPPA, or an evolved NRPPA.

In this embodiment of the present invention, the terminal or the network-side device sends the RRC state indicator information to the location management device, so that the location management device can determine, based on the RRC state indicator information, positioning behavior of the terminal in the RRC connected state, reporting or measurement information of the terminal in the RRC connected state, and/or a confidence level of reporting or measurement information of the terminal in the RRC connected state; and so on.

Referring to FIG. 26, the present invention further provides a positioning method, applied to a location management device and including:
Step 271: Receive RRC state indicator information sent by a terminal or a network-side device, where the RRC state indicator information includes at least RRC connection state information.

Optionally, the method further includes:
receiving at least one of the following that is sent by the terminal or the network-side device: PRS measurement information and location information of the terminal.

The method further includes:
according to the RRC state indicator information, determining at least one of the following:
a positioning behavior of the terminal in the RRC connected state;
reporting or measurement information of the terminal in the RRC connected state; and
a confidence level of reporting or measurement information of the terminal in the RRC connected state.

Optionally, the RRC state indicator information sent by the terminal is received by using an LPP or evolved LPP.

The RRC state indicator information sent by the network-side device is received by using an LPPA, an evolved LPPA, an NRPPA, or an evolved NRPPA.

In this embodiment of the present invention, the location management device may determine, based on the received RRC state indicator information, positioning behavior of the terminal in the RRC connected state, reporting or measurement information of the terminal in the RRC connected state, and/or a confidence level of reporting or measurement information of the terminal in the RRC connected state; and so on.

Referring to FIG. 27, the present invention further provides a communications device 280, including:
a first sending module 281, configured to send RRC state indicator information to a location management device, where the communications device is a terminal or a network-side device, and the RRC state indicator information includes at least RRC connection state information.

In some embodiments of the present invention, optionally, the communications device 280 further includes:
a second sending module, configured to send at least one of the following to the location management device: positioning reference signal PRS measurement information and location information of the terminal.

Optionally, if the communications device is a terminal, the sending module 281 sends the RRC state indicator information to the location management device by using an LPP or evolved LPP.

If the communications device is a network-side device, the sending module 281 sends the RRC state indicator information to the location management device by using an LPPA, an evolved LPPA, an NRPPA, or an evolved NRPPA.

Referring to FIG. 28, the present invention further provides a location management device 290, including:
a first receiving module 291, configured to receive RRC state indicator information sent by a terminal or a network-side device, where the RRC state indicator information includes at least RRC connection state information.

In some embodiments of the present invention, optionally, the location management device 290 further includes:
a second receiving module, configured to receive at least one of the following that is sent by the terminal or the network-side device: PRS measurement information and location information of the terminal.

In some embodiments of the present invention, optionally, the location management device 290 further includes:
a determining module, configured to determine at least one of the following based on the RRC state indicator information:
a positioning behavior of the terminal in the RRC connected state;
reporting or measurement information of the terminal in the RRC connected state; and
a confidence level of reporting or measurement information of the terminal in the RRC connected state.

Optionally, the receiving module 291 receives, by using an LPP or an evolved LPP, the RRC state indicator information sent by the terminal.

The receiving module 291 receives, by using an LPPA, an evolved LPPA, an NRPPA, or an evolved NRPPA, the RRC state indicator information sent by the network-side device.

Referring to FIG. 29, an embodiment of the present invention further provides a communications device 300, including a processor 301, a memory 302, and a computer program stored in the memory 302 and capable of running on the processor 301. When the computer program is executed by the processor 301, the processes in the foregoing embodiment of the positioning method applied to the communications device are implemented, with the same technical effects achieved. To avoid repetition, details are not described again herein.

Referring to FIG. 30, an embodiment of the present invention further provides a location management device 310, including a processor 311, a memory 312, and a computer program stored in the memory 312 and capable of running on the processor 311. When the computer program is executed by the processor 311, the processes in the foregoing embodiment of the positioning method applied to the location management device are implemented, with the same technical effects achieved. To avoid repetition, details are not described again herein.

An embodiment of the present invention further provides a computer-readable storage medium, where a computer program is stored in the computer-readable storage medium. When the computer program is executed by a processor, the processes in the foregoing embodiment of the method for sending an SRS applied to the terminal can be implemented, with the same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

An embodiment of the present invention further provides a computer-readable storage medium, where a computer program is stored in the computer-readable storage medium. When the computer program is executed by a processor, the processes in the foregoing embodiment of the method for configuring an SRS applied to the network-side device can be implemented, with the same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

An embodiment of the present invention further provides a computer-readable storage medium, where a computer program is stored in the computer-readable storage medium. When the computer program is executed by a processor, the processes in the foregoing embodiment of the method for measuring an SRS applied to the location management device can be implemented, with the same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

An embodiment of the present invention further provides a computer-readable storage medium, where a computer program is stored in the computer readable storage medium. When the computer program is executed by a processor, the processes of the foregoing positioning method applied to the communications device can be implemented, with the same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

An embodiment of the present invention further provides a computer-readable storage medium, where a computer program is stored in the computer readable storage medium. When the computer program is executed by a processor, the processes of the foregoing positioning method applied to the location management device can be implemented, with same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

It may be understood that the embodiments described in this disclosure may be implemented by hardware, software, firmware, middleware, microcode, or a combination thereof. For hardware implementation, a module, a unit, a submodule, a subunit, and the like may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially, or the part contributing to the related art, may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of the present invention.

The embodiments of the present invention have been described with reference to the attached drawings; however, the present invention is not limited to the aforesaid embodiments, and these embodiments are merely illustrative but are not intended to limit the present invention. Persons of ordinary skill in the art may further derive many other implementations according to the teachings of the present invention and within the scope defined in the claims, and all of the implementations shall fall within the scope of the present invention.

## Claims

1. A method for sending a sounding reference signal SRS, applied to a terminal and comprising:
sending a sounding reference signal SRS for positioning based on discontinuous reception DRX-related target information and/or a radio resource control RRC status.

2. The method according to claim 1, wherein
the step of sending an SRS for positioning based on DRX-related target information comprises:
sending the SRS for positioning only in a DRX active time, or sending the SRS for positioning in a DRX non-active time; or
the step of sending an SRS for positioning based on an RRC status comprises:
sending the SRS for positioning only in an RRC connected state, or sending the SRS for positioning in an RRC non-connected state.

3. The method according to claim 1 or 2, wherein the target information comprises first information, and the method further comprises:
sending the first information to a location management device, wherein the first information comprises at least one of the following: DRX configuration information, configuration information of the SRS, a current period of the SRS, indication information for indicating sending or not sending the SRS in the DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal.

4. The method according to claim 1 or 2, wherein the target information comprises first information, and the method further comprises:
receiving first information sent by a network-side device, wherein the first information comprises at least one of the following: DRX configuration information, configuration information of the SRS, a current period of the SRS, indication information for indicating sending or not sending the SRS in the DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and/or
the target information comprises second information, and the method further comprises: receiving second information sent by a location management device, wherein the second information comprises at least one of the following: indication information for indicating sending or not sending the SRS in the DRX non-active time, a current period of the SRS, and a relationship between sending of the SRS and wake-up information.

5. The method according to claim 4, wherein the sending an SRS for positioning based on DRX-related target information comprises:
in a slot in which the first information or the second information is received, or in an NT1 time after the first information or the second information is received, or in a next period of the SRS after a slot in which the first information or the second information is received, sending the SRS for positioning based on the DRX-related target information.

6. The method according to claim 3, wherein the DRX configuration information comprises at least one of the following: a DRX cycle, configuration information of a DRX onDuration timer, configuration information of a DRX inactivity timer, configuration information of a DRX downlink retransmission timer, configuration information of a DRX uplink retransmission timer, configuration information of a DRX long-cycle start offset timer, configuration information of a DRX short cycle, configuration information of a DRX short-cycle timer, configuration information of a DRX downlink HARQ round-trip transmission time timer, configuration information of a DRX uplink HARQ round-trip transmission time timer, and configuration information of a DRX command MAC CE.

7. The method according to claim 3, wherein the current period of the SRS is one of the following:
T2 in a case that DRX has been configured;
T3 in a case that the DRX cycle has changed; and
T1 in a case that the DRX configuration has been cancelled; wherein
T 1, T2, and T3 are different from each other.

8. The method according to claim 3, wherein the current period of the SRS is determined based on a function of a configuration periodicity of the SRS and/or a function of the DRX cycle.

9. The method according to claim 8, wherein the function comprises one of the following:
Max (A, B); and
lowest common multiple (A, B); wherein
A is a value determined based on the function of the configuration periodicity of the SRS, and B is a value determined based on the function of the DRX cycle.

10. The method according to claim 1, wherein the sending an SRS for positioning in a DRX non-active time comprises:
sending the SRS only in the DRX non-active time; or
skipping sending the SRS for positioning in a DRX non-active time; or
sending the SRS for positioning in the DRX non-active time and a DRX active time.

11. The method according to claim 10, wherein the sending the SRS only in the DRX non-active time comprises:
if a time window for sending the SRS partially overlaps a time window of the DRX active time, cancelling sending the SRS in an overlapping portion.

12. The method according to claim 1 or 10, wherein the sending the SRS for positioning in the DRX active time comprises:
cancelling sending the SRS if the SRS conflicts with the following information: a physical downlink control channel PDCCH, a physical uplink control channel PUCCH, a physical uplink shared channel PUSCH, a PUCCH for dynamic scheduling, a PUSCH for dynamic scheduling, a PUCCH carrying a scheduling request SR, or retransmission.

13. The method according to claim 1 or 10, wherein the sending the SRS for positioning in the DRX active time comprises:
if no wake-up signal is detected, sending, to a location management device, indication information for indicating not sending the SRS in a current period due to influence of a wake-up signal.

14. The method according to claim 1, wherein behaviors are different for an aperiodic SRS, a periodic SRS, and a semi-static SRS.

15. The method according to claim 14, wherein for the aperiodic SRS, the SRS for positioning is sent in a DRX active time and a DRX non-active time.

16. The method according to claim 1, wherein a periodicity of the SRS in an RRC non-connected state is different from a periodicity of the SRS in an RRC connected state.

17. The method according to claim 16, wherein the periodicity of the SRS in the RRC non-connected state is greater than the periodicity of the SRS in the RRC connected state.

18. The method according to claim 1, further comprising:
sending RRC state indicator information to a location management device.

19. The method according to claim 18, wherein the RRC state indicator information comprises at least one of the following: indication information for indicating the location management device to cancel, reconfigure, or re-request measurement on the SRS by a neighboring cell, relationship information between sending of the SRS and an RRC connected state, and RRC connection state information.

20. A method for configuring an SRS, applied to a network-side device and comprising:
sending first information to a terminal, a location management device, or a neighboring cell, wherein the first information comprises at least one of the following: DRX configuration information, configuration information of the SRS, a current period of the SRS, indication information for indicating sending or not sending the SRS in a DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and the first information is used to determine at least one of the following: whether the terminal sends or does not send the SRS in the DRX non-active time and how to send the SRS; and/or
receiving second information sent by a location management device, wherein the second information comprises at least one of the following: indication information for indicating sending or not sending an SRS for positioning in a DRX non-active time, a current period of the SRS, and a relationship between sending of the SRS and wake-up information; or
sending third information to a terminal, a location management device, or a neighboring cell, wherein the third information comprises at least one of the following: configuration information of an SRS for positioning and RRC state indicator information; and the third information is used to determine: whether the terminal sends or does not send the SRS in an RRC non-connected state.

21. The method according to claim 20, wherein
the current period of the SRS is one of the following:
T2 in a case that the terminal has configured DRX;
T3 in a case that a DRX cycle of the terminal has changed; and
T1 in a case that the terminal cancels DRX configuration; wherein
T 1, T2, and T3 are different from each other.

22. The method according to claim 20 or 21, wherein the current period of the SRS is determined based on a function of a configuration periodicity of the SRS and/or a function of the DRX cycle.

23. The method according to claim 22, wherein the function is one of the following:
Max (A, B); and
lowest common multiple (A, B); wherein
A is a value determined based on the function of the configuration periodicity of the SRS, and B is a value determined based on the function of the DRX cycle.

24. The method according to claim 20, wherein the RRC connected state indication information comprises one of the following:
indication information for indicating the location management device to cancel, reconfigure, or re-request measurement on the SRS by the neighboring cell;
relationship information between sending of the SRS and an RRC connected state; and
RRC connection state information.

25. A method for measuring an SRS, applied to a location management device and comprising:
receiving first information, wherein the first information comprises at least one of the following: DRX configuration information, configuration information of the SRS, a current period of the SRS, indication information for indicating sending or not sending the SRS in a DRX non-active time, indication information that a terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and
determining at least one of the following based on the first information: whether the terminal sends or does not send an SRS for positioning in the DRX non-active time and how to send the SRS; and/or
sending second information to a network-side device or a terminal, wherein the second information comprises at least one of the following: indication information for indicating sending or not sending an SRS for positioning in a DRX non-active time, a current period of the SRS, and a relationship between sending of the SRS and wake-up information; or
receiving third information, wherein the third information comprises at least one of the following: configuration information of an SRS for positioning and RRC state indicator information; and the third information is used to determine whether the terminal sends or does not send the SRS in an RRC non-connected state; and
determining, based on the third information, whether the terminal sends or does not send the SRS for positioning in the RRC non-connected state.

26. The method according to claim 25, further comprising:
sending first indication information to a neighboring cell, wherein the first indication information is used to cancel, reconfigure, or re-request measurement on the SRS by the neighboring cell; and/or
sending a location request or a measurement request to a neighboring cell, wherein the request comprises a measurement period or a reporting period, and the measurement period or reporting period is the current period of the SRS or a period determined by the location management device.

27. A terminal, comprising:
a first sending module, configured to send an SRS for positioning based on DRX-related target information and/or an RRC status.

28. A network-side device, comprising:
a first sending module, configured to send first information to a terminal, a location management device, or a neighboring cell, wherein the first information comprises at least one of the following: DRX configuration information, configuration information of an SRS, a current period of the SRS, indication information for indicating sending or not sending the SRS in a DRX non-active time, indication information that the terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and the first information is used to determine at least one of the following: whether the terminal sends or does not send the SRS in the DRX non-active time and how to send the SRS; and/or
a receiving module, configured to receive second information sent by a location management device, wherein the second information comprises at least one of the following: indication information for indicating sending or not sending an SRS for positioning in a DRX non-active time, a current period of the SRS, and a relationship between sending of the SRS and wake-up information; or
a second sending module, configured to send third information to a terminal, a location management device, or a neighboring cell, wherein the third information comprises at least one of the following: configuration information of an SRS for positioning and RRC state indicator information; and the third information is used to determine: whether the terminal sends or does not send the SRS in an RRC non-connected state.

29. A location management device, comprising:
a first receiving module, configured to receive first information, wherein the first information comprises at least one of the following: DRX configuration information, configuration information of an SRS, a current period of the SRS, indication information for indicating sending or not sending the SRS in a DRX non-active time, indication information that a terminal has configured DRX, indication information that a DRX cycle of the terminal has changed, indication information that the terminal has cancelled DRX configuration, a relationship between sending of the SRS and wake-up information, and indication information that the SRS in the current period is not to be sent due to influence of a wake-up signal; and
a first determining module, configured to determine at least one of the following based on the first information: whether the terminal sends or does not send an SRS for positioning in the DRX non-active time and how to send the SRS; and/or
a sending module, configured to send second information to a network-side device or a terminal, wherein the second information comprises at least one of the following: indication information for indicating sending or not sending an SRS for positioning in a DRX non-active time, a current period of the SRS, and a relationship between sending of the SRS and wake-up information; or
a second receiving module, configured to receive third information, wherein the third information comprises at least one of the following: configuration information of an SRS for positioning and RRC state indicator information; and the third information is used to determine whether the terminal sends or does not send the SRS in an RRC non-connected state; and
a second determining module, configured to determine, based on the third information, whether the terminal sends or does not send the SRS for positioning in the RRC non-connected state.

30. A terminal, comprising a processor, a memory, and a computer program stored in the memory and capable of running on the processor, wherein when the computer program is executed by the processor, the steps of the method for sending an SRS according to any one of claims 1 to 19 are implemented.

31. A network-side device, comprising a processor, a memory, and a computer program stored in the memory and capable of running on the processor, wherein when the computer program is executed by the processor, the steps of the method for configuring an SRS according to any one of claims 20 to 24 are implemented.

32. A location management device, comprising a processor, a memory, and a computer program stored in the memory and capable of running on the processor, wherein when the computer program is executed by the processor, the steps of the method for measuring an SRS according to claim 25 or 26 are implemented.

33. A positioning method, applied to a communications device and comprising:
sending RRC state indicator information to a location management device, wherein the communications device is a terminal or a network-side device, and the RRC state indicator information comprises at least RRC connection state information.

34. The method according to claim 33, further comprising:
sending at least one of the following to the location management device: positioning reference signal PRS measurement information and location information of the terminal.

35. A positioning method, applied to a location management device and comprising:
receiving RRC state indicator information sent by a terminal or a network-side device, wherein the RRC state indicator information comprises at least RRC connection state information.

36. The method according to claim 35, further comprising:
receiving at least one of the following that is sent by the terminal or the network-side device: PRS measurement information and location information of the terminal.

37. The method according to claim 35 or 36, further comprising:
determining at least one of the following based on the RRC state indicator information:
a positioning behavior of the terminal in the RRC connected state;
reporting or measurement information of the terminal in the RRC connected state; and
a confidence level of reporting or measurement information of the terminal in the RRC connected state.

38. A communications device, comprising:
a sending module, configured to send RRC state indicator information to a location management device, wherein the communications device is a terminal or a network-side device, and the RRC state indicator information comprises at least RRC connection state information.

39. A location management device, comprising:
a receiving module, configured to receive RRC state indicator information sent by a terminal or a network-side device, wherein the RRC state indicator information comprises at least RRC connection state information.

40. A communications device, comprising a processor, a memory, and a computer program stored in the memory and capable of running on the processor, wherein when the computer program is executed by the processor, the steps of the positioning method according to claim 33 or 34 are implemented.

41. A location management device, comprising a processor, a memory, and a computer program stored in the memory and capable of running on the processor, wherein when the computer program is executed by the processor, the steps of the positioning method according to any one of claims 35 to 37 are implemented.

42. A computer-readable storage medium, wherein the computer-readable storage medium stores a computer program, and when the computer program is executed by a processor, the steps of the method for sending an SRS according to any one of claims 1 to 19 are implemented; or when the computer program is executed by a processor, the steps of the method for configuring an SRS according to any one of claims 20 to 24 are implemented; or when the computer program is executed by a processor, the steps of the method for measuring an SRS according to claim 25 or 26 are implemented; or when the computer program is executed by a processor, the steps of the positioning method according to claim 33 or 34 are implemented; or when the computer program is executed by a processor, the steps of the positioning method according to any one of claims 35 to 37 are implemented.
